(19) Europäisches Patentamt
European Patent Office
Office européen des brevets

(11) **EP 2 901 120 B1**

(12) **EUROPÄISCHE PATENTSCHRIFT**

(45) Veröffentlichungstag und Bekanntmachung des Hinweises auf die Patenterteilung:
**19.06.2019 Patentblatt 2019/25**

(51) Int Cl.:
***G01L 3/10*** *(2006.01)*

(21) Anmeldenummer: **13770886.3**

(22) Anmeldetag: **25.09.2013**

(86) Internationale Anmeldenummer:
**PCT/EP2013/070025**

(87) Internationale Veröffentlichungsnummer:
**WO 2014/049029 (03.04.2014 Gazette 2014/14)**

(54) **VERFAHREN UND VORRICHTUNG ZUR BESTIMMUNG DES AUF EINEN UM EINE DREHACHSE DREHBAR ANTREIBBAREN ROTATIONSKÖRPER AUSGEÜBTEN DREHMOMENTS**

METHOD AND APPARATUS FOR DETERMINING THE TORQUE EXERTED ON A ROTATING BODY WHICH CAN BE ROTATABLY DRIVEN ABOUT AN AXIS OF ROTATION

PROCÉDÉ ET DISPOSITIF POUR DÉTERMINER LE COUPLE EXERCÉ SUR UN CORPS ROTATIF POUVANT ÊTRE ENTRAÎNÉ EN ROTATION AUTOUR D'UN AXE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2012 DE 102012109173**

(43) Veröffentlichungstag der Anmeldung:
**05.08.2015 Patentblatt 2015/32**

(73) Patentinhaber: **Optical Torque Systems GmbH 55286 Wörrstadt (DE)**

(72) Erfinder:
• **ALLARD, Gabriele 55276 Oppenheim (DE)**

• **GERLITZKI, Siegfried 55276Oppenheim (DE)**

(74) Vertreter: **Westphal, Mussgnug & Partner Patentanwälte mbB Am Riettor 5 78048 Villingen-Schwenningen (DE)**

(56) Entgegenhaltungen:
EP-B1- 0 954 746      WO-A1-96/06330
DE-A1- 4 038 413      DE-A1- 4 038 413
DE-A1- 19 633 380     DE-U1- 20 305 732
DE-U1- 20 305 732

**Beschreibung**

Die Erfindung betrifft ein Verfahren und eine Vorrichtung zur Bestimmung des auf einen um eine Drehachse drehbar antreibbaren Rotationskörper ausgeübten Drehmoments.

Ein Verfahren und eine Vorrichtung zur Bestimmung des auf einen um eine Drehachse drehbar antreibbaren Rotationskörper ausgeübten Drehmoments mit einem ersten und einem zweiten Messgeber, die an dem Rotationskörper in axialem Abstand zueinander angeordnet sind und den Rotationskörper umschließende Ringe aus alternierend unterschiedliches Signalverhalten aufweisenden Feldern umfassen, wobei vorzugsweise die Anzahl der Felder beider Ringe gleich ist, ist beispielsweise aus der EP 0 954 746 B1 bekannt. Die dort beschriebene Vorrichtung weist einen dem ersten Messgeber zugeordneten ersten Messaufnehmer und einen dem zweiten Messgeber zugeordneten zweiten Messaufnehmer auf, die beide jeweils ein Ausgangssignal liefern, aus denen erste und zweite Rechtecksignale gebildet werden, wobei aus den Abständen von Flanken der ersten und zweiten Rechtecksignale über einer vollen Umdrehung des Rotationskörpers das durchschnittliche Drehmoment bestimmt wird.

Weitere Verfahren und/oder Vorrichtungen zur Bestimmung des auf einen um eine Drehachse drehbar antreibbaren Rotationskörper ausgeübten Drehmoments sind aus der WO 96 / 06330 A1, DE 196 33 380 A1, DE 40 38 413 A1 und der DE 203 05 732 U1 bekannt

Eine derartige Vorrichtung weist den Nachteil auf, dass technisch bedingt Relativbewegungen zwischen den Messaufnehmern und den Messgebern stattfinden, welche das Messergebnis verfälschen können. Eine derartige Vorrichtung weist weiterhin den Nachteil auf, dass die Auswertung basierend auf vollständigen Umdrehungen des Rotationskörpers nur die Bestimmung des durchschnittlichen Drehmoments erlaubt. Da eine Ermittlung des Drehmoments mindestens eine vollständige Umdrehung des Rotationskörpers voraussetzt, ist zudem mit einer derartigen Vorrichtung zeitlich nur eine langsame Messung möglich.

Die Aufgabe der Erfindung besteht daher darin, ein Verfahren und eine Vorrichtung zur Bestimmung des auf ein um eine Drehachse drehbar antreibbaren Rotationskörper ausgeübten Drehmoments bereitzustellen, welche einen weniger störanfälligen Aufbau und damit insbesondere eine verbesserte Erfassung des tatsächlichen durchschnittlichen Drehmoments oder der verrichteten Arbeit ermöglicht.

Die Aufgabe wird erfindungsgemäß gelöst durch ein Verfahren zur Bestimmung des auf einen um eine Drehachse drehbar antreibbaren Rotationskörper ausgeübten Drehmoments mit den Merkmalen des Patentanspruchs 1 und eine Vorrichtung zur Bestimmung des auf ein um eine Drehachse drehbar antreibbaren Rotationskörper ausgeübten Drehmoments mit den Merkmalen des Patentanspruchs 3.

Vorteilhafte Ausgestaltungen und Weiterbildungen sind in den abhängigen Ansprüchen angegeben.

Das erfindungsgemäße Verfahren zur Bestimmung des auf einen um eine Drehachse drehbar antreibbaren Rotationskörpers ausgeübten Drehmoments, mit einem ersten und einem zweiten Messgeber, die jeweils mit einem Befestigungselement an dem Rotationskörper in axialem Abstand zueinander angeordnet sind und den Rotationskörper umschließende Ringe aus alternierend unterschiedliches Signalverhalten aufweisenden Feldern umfassen, zeichnet sich dadurch aus, dass dem ersten Messgeber und dem zweiten Messgeber gemeinsam ein Messaufnehmer zugeordnet ist, welcher von beiden Messgebern gemeinsam ein Ausgangssignal aufnimmt, aus welchem ein Rechtecksignal gebildet wird, aus welchem in einem ersten Schritt aus Flankenabständen bestimmter steigender und/oder fallender Flanken des Rechtecksignals konstante Werte $T_i$, welche von der Geometrie der Ringe der beiden Messgeber abhängig sind und insbesondere von dem ausgeübten Drehmoment unabhängig sind, und variable Werte $\alpha_i$, welche von dem ausgeübten Drehmoment abhängig sind, bestimmt werden.

Der wesentliche Gedanke der Erfindung ist, die Ringe der beiden Messgeber an einem Wirkort zusammenzuführen und lediglich einen Messaufnehmer zur Ermittlung eines einzigen Rechteckssignals, welches von beiden Messgebern beeinflusst wird, zu verwenden. Dabei ist jedoch wesentlich, dass die Befestigungselemente der Messgeber an dem zu vermessenden Rotationskörper axial gegeneinander beabstandet sind, da ansonsten keine Torsion ermittelt werden könnte.

Bei einer offenen Anordnung der beiden Ringe der beiden Messgeber gegeneinander sind die konstanten Werte $T_i$, $T_i'$ als der Abstand einer Flanke zur übernächsten gleichsinnigen Flanke oder als der Abstand zweier benachbarter gegensinniger Flanken, insbesondere der Abstand zwischen einer steigenden Flanke und einer darauffolgenden fallenden Flanke, und die variablen Werte $\alpha_i$, $\alpha_i'$ als der Abstand zweier benachbarter gegensinniger Flanken, welche zu den bei der Bestimmung der konstanten Werte verwendeten Flanken gegensinnig ausgebildet sind, insbesondere der Abstand zwischen einer fallenden Flanke und einer darauffolgenden steigenden Flanke, oder als der Abstand zweier benachbarter gleichsinniger Flanken definiert und bei einer teilweise verdeckten Anordnung der beiden Ringe der beiden Messgeber gegeneinander die konstanten Werte $T_i$ als der Abstand zweier benachbarter gleichsinniger Flanken und die variablen Werte $\alpha_i$ als der Abstand zweier benachbarter gegensinniger Flanken definiert. Diese Zuordnung ermöglicht die Bestimmung des Drehmoments aus einem einzigen Rechtecksignal.

Die Werte $T_i$, $T_i'$ entsprechen insbesondere der Breite der signalerzeugenden Felder der Ringe oder einer Periode, welche ein signalerzeugendes Feld und ein darauffolgendes nichtsignalerzeugendes Feld umfasst, so dass

die Werte $T_i$, $T_i'$ durch die konstruktive Ausgestaltung der Ringe vorgegeben sind und während der Belastung mit Drehmomenten konstant bleiben. Die Werte $\alpha_i$, $\alpha_i'$ entsprechen insbesondere dem Abstand zweier signalerzeugende Felder von unterschiedlichen Messgebern, die bei Verdrehung der beiden Messgeber gegeneinander auf Grund der drehmomentabhängigen Torsion des Rotationskörpers variabel sind.

Eine Ausführungsform der Erfindung sieht vor, dass bei einer offenen Anordnung der beiden Ringe der beiden Messgeber gegeneinander über eine oder mehrere vollständige Umdrehungen des unbelasteten, drehmomentlosen Rotationskörpers die dem ersten Messgeber zugeordneten konstanten Werte $T_{mli}$, i=1...n, und die variablen Werte $\alpha_{mli}$, 1=1...n, jeweils aufsummiert und die dem zweiten Messgeber zugeordneten konstanten Werte $T_{mli}'$, i=1...n, und die variablen Werte $\alpha_{mli}'$, i=1...n, jeweils auf summiert und die momentlosen Verhältnisse

$$\gamma_{ml} = (\alpha_{ml1} + \alpha_{ml2} + ... + \alpha_{mln}) / (T_{ml1} + T_{ml2} + ... + T_{mln})$$
$$= \sum_{i=1}^{n} a_{mli} / \sum_{i=1}^{n} T_{mli}$$

und

$$\gamma'_{ml} = (\alpha'_{ml1} + \alpha'_{ml2} + ... + \alpha'_{mln}) / (T'_{ml1} + T'_{ml2} + ... + T'_{mln})$$
$$= \sum_{i=1}^{n} a'_{mli} / \sum_{i=1}^{n} T'_{mli}$$

gebildet werden, wobei die $\gamma_{m1}$-Werte und $\gamma'_{m1}$-Werte folgender Bedingung genügen:

$$\gamma_{ml} < \gamma'_{ml}$$

wobei über eine oder mehrere vollständige Umdrehungen des mit dem zu bestimmenden Drehmoment belasteten Rotationskörpers die dem ersten Messgeber zugeordneten konstanten Werte $T_{mi}$, i=1...n, und die variablen Werte $\alpha m_i$, i=1...n, jeweils aufsummiert und die dem zweiten Messgeber zugeordneten konstanten Werte $T_{mi}'$, i=1...n, und die variablen Werte $\alpha_{mi}'$, i=1...n, jeweils aufsummiert und die momentbeaufschlagten Verhältnisse

$$\gamma_m = (\alpha_{m1} + \alpha_{m2} + ... + \alpha_{mn}) / (T_{m1} + T_{m2} + ... + T_{mn})$$
$$= \sum_{i=1}^{n} a_{mi} / \sum_{i=1}^{n} T_{mi}$$

und

$$\gamma'_m = (\alpha'_{m1} + \alpha'_{m2} + ... + \alpha'_{mn}) / (T'_{m1} + T'_{m2} + ... + T'_{mn})$$
$$= \sum_{i=1}^{n} a'_{mi} / \sum_{i=1}^{n} T'_{mi}$$

gebildet werden, wobei die $\gamma_m$-Werte und $\gamma'_m$-Werte folgender Bedingung genügen:

$$\gamma_m < \gamma'_m$$

wobei die Arbeit an dem momentbeaufschlagten Rotationskörper bestimmt wird aus den Gleichungen

$$W = \int_0^{2\pi} M d\varphi = \bar{M} 2\pi \approx |(\gamma_m - \gamma_{ml})| k$$

und

$$W' = \int_0^{2\pi} M` d\varphi = \bar{M}`2\pi \approx |(\gamma'_m - \gamma'_{ml})| k,$$

wobei k eine Kalibrierkonstante und $\varphi$ der Drehwinkel des Rotationskörpers ist und wobei das gesamte Drehmoment bestimmt wird durch $\bar{M} + \bar{M}'$, wobei

$$\bar{M} = W/2\pi \approx |(\gamma_m - \gamma_{m1})|k/2\pi$$

und

$$\bar{M}' = W'/2\pi \approx |(\gamma'_m - \gamma'_{m1})|k/2\pi.$$

Gemäß einer besonders bevorzugten Ausführungsform der Erfindung wird die Summenbildung während einer Umdrehung des Rotationskörpers an wenigstens zwei verschiedenen Flanken, vorzugsweise an jeder steigenden Flanke und/oder jeder fallenden Flanke neu begonnen. Dadurch wird es möglich, während der Drehung des Rotationskörpers spätestens nach einer vollständigen Umdrehung mehrere Drehmomentwerte pro Umdrehung auszugeben, was die Genauigkeit der Messung erhöht, und beispielsweise über mehrere Drehmomentwerte einer Umdrehung zu mitteln, um die Auswertung zu verbessern.

Vorteilhafterweise ist der Drehwinkel des Rotationskörpers mittels des Rechtecksignals bestimmbar, insbesondere durch Bildung des Verhältnisses zweier konstanter Werte $T_i/T_j$ oder durch Bestimmung des Abstands einer Flanke des Rechtecksignals zu einer durch eine Markierung an wenigstens einem der beiden Messgeber hervorgerufenen Markierung im Rechtecksignal. Die Bestimmung des Drehwinkels anhand des Rechtecksignals liefert den Vorteil, dass kein zusätzlicher Messwertaufnehmer vonnöten ist.

Eine besonders bevorzugte Ausführungsform der Erfindung sieht vor, dass zur Bestimmung eines einem Drehwinkel des unbelasteten, drehmomentlosen Rotationskörpers zugeordneten Drehmoments das momentlose Verhältnis

$$\gamma_{m1i} = \alpha_{m1i}/T_{m1i}$$

und das momentbeaufschlagte Verhältnis

$$\gamma_{mi} = \alpha_{mi}/T_{mi}$$

gebildet wird, wobei das auf den momentbeaufschlagten Rotationskörper ausgeübte Drehmoment bestimmt wird aus der Gleichung

$$Mi \approx |(\gamma_{mi} - \gamma_{m1i})|k,$$

wobei k eine Kalibrierkonstante ist.
Dadurch wird es möglich, auch wenn noch keine vollständige Umdrehung des Rotationskörpers stattgefunden hat, Informationen über das ausgeübte Drehmoment zu gewinnen, so dass zeitlich kurz nach Beginn der Drehung bereits ein Wert für das Drehmoment bestimmt werden kann.

Die erfindungsgemäße Vorrichtung zur Bestimmung des auf einen um eine Drehachse drehbar antreibbaren Rotationskörpers ausgeübten Drehmoments, mit einem ersten und einem zweiten Messgeber, die jeweils mit einem Befestigungselement an dem Rotationskörper in axialem Abstand zueinander angeordnet sind und den Rotationskörper umschließende Ringe aus alternierend unterschiedliches Signalverhalten aufweisenden Feldern umfassen, zeichnet sich dadurch aus, dass dem ersten Messgeber und dem zweiten Messgeber gemeinsam ein Messaufnehmer zugeordnet ist, welcher von beiden Messgebern gemeinsam ein Ausgangssignal aufnimmt, aus welchen ein Rechtecksignal ermittelbar ist.

Der wesentliche Gedanke der Erfindung ist, die Ringe der beiden Messgeber an einem Wirkort zusammenzuführen und lediglich einen einzigen Messaufnehmer zur Ermittlung eines einzigen Rechteckssignals, welches von beiden Messgebern beeinflusst wird, zu verwenden, was eine vereinfachte konstruktive Ausgestaltung und eine weniger störanfällige Konstruktion der Vorrichtung ermöglicht.

Das Zusammenführen der beiden Messgeber an einem Wirkort wird dadurch verbessert, dass wenigstens einer der Ringe axial relativ zu dem Befestigungselement des zugehörigen Messgebers an dem Rotationskörper derart beabstandet ist, dass die Ringe der beiden Messgeber ohne oder mit einem kleinen axialen Abstand zueinander angeordnet sind.

Die Ringe der beiden Messgeber können ohne axialen Abstand zueinander angeordnet sein, beispielsweise axial ineinander verzahnt oder radial ineinander verzahnt, oder mit einem kleinen axialen Abstand zueinander angeordnet sein. Unter einem kleinen axialen Abstand ist dabei ein Abstand zu verstehen, der wesentlich geringer ist als der axiale Abstand der Befestigungselemente der beiden Messgeber, beispielsweise weniger als 10 %, besonders bevorzugt weniger als 5 % oder sogar weniger als 1 % des axialen Abstands der Befestigungselemente. Insbesondere ist unter einem kleinen Abstand ein Abstand zu verstehen, der in der Größenordnung der axialen Dicke der Ringe liegt oder der in der Größenordnung der Taumelbewegung der Ringe bei Rotation liegt, sodass bei Verdrehung der beiden Ringe gegeneinander keine Berührung der Ringe und somit keine Beschädigung der Ringe auftritt. Mit anderen Worten liegen die beiden Ringe möglichst nahe beieinander und berühren sich gerade nicht. Um einen axialen Abstand zwischen den Befestigungselementen des Messgebers und dem Ring des entsprechenden Messgebers zu ermöglichen, kann der entsprechende Messgeber beispielsweise eine zylindrische Hülse aufweisen, welche mit einem Ende an dem Rotationskörper befestigt ist und an deren gegenüberliegendem Ende der entsprechende Ring angeordnet ist.

Gemäß einer bevorzugten Ausführungsform der Erfindung beruht der Messaufnehmer auf einem optischen, induktiven, magnetischen oder kapazitiven Prinzip, wodurch je nach Anwendungsfall die Auflösung optimiert, die Herstellungskosten optimiert und/oder die Fehleranfälligkeit minimiert werden können.

Eine bevorzugte Ausführungsform der Erfindung sieht vor, dass der Messaufnehmer an dem Rotationskörper und/oder an einem oder beiden der Messgeber spielfrei gelagert angeordnet ist. Dadurch kann die Relativbewegung zwischen Messaufnehmer und den Messgebern nahezu eliminiert werden, so dass die Vorrichtung weniger störanfällig wird.

Vorzugsweise ist die Anzahl der Felder beider Ringe gleich, was das Auswerteverfahren vereinfachen kann.

Gemäß einer vorteilhaften Ausgestaltung der Erfindung sind die Felder eines Rings nicht sämtlich gleich groß ausgebildet. Insbesondere können sämtliche gleichartigen Felder eines Rings unterschiedlich groß ausgestaltet sein. Eine Variation der Breite der Felder ermöglicht eine Bestimmung des Drehwinkels sowie der Drehrichtung der Messgeber.

Vorzugsweise weisen die Ringe transparente und absorbierende Felder oder reflektierende und nicht reflektierende Felder auf, sodass ein Messaufnehmer basierend auf einem optischen Prinzip verwendet werden kann, was eine besonders kostengünstige Ausgestaltung der erfindungsgemäßen Vorrichtung ermöglicht. Dabei können die transparenten Felder oder die nicht reflektierenden Felder insbesondere auch durch Lücken oder Löcher in dem Messgeber realisiert werden, was eine besonders einfache Fertigung ermöglicht.

Gemäß einer besonders bevorzugten Ausführungsform der Erfindung ist der Rotationskörper als Tretlagerwelle ausgebildet, um das Drehmoment bei Fahrrädern, Ergometern und Indoorbikes bestimmen zu können und eine Möglichkeit zur Ermittlung der geleisteten Arbeit und vorzugsweise der Leistung in Watt bereit stellen zu können. Das Anbringen beider Messgeber an der Tretlagerwelle stellt eine besonders einfache konstruktive Ausgestaltung dar.

In einer alternativen Ausführungsform ist der Rotationskörper als Tretlagerwelle ausgebildet, um welche eine Torsionshülse angeordnet ist, welche mit einem ersten Ende an einem ersten Ende der Tretlagerwelle angeordnet ist, wobei der Abtrieb an einem dem ersten Ende gegenüberliegenden zweiten Ende der Torsionshülse erfolgt, wobei einer der Messgeber an der Torsionshülse und der andere der Messgeber an der Tretlagerwelle angeordnet ist. Durch die Verwendung einer Torsionshülse können die von zwei Kurbeln auf die Tretlagerwelle ausgeübten Drehmomente zuverlässig auf einen Abtrieb übertragen werden. Dadurch, dass einer der Messgeber an der Torsionshülse angeordnet ist, welche wiederum an der Tretlagerwelle angeordnet ist, kann mit Hilfe der beiden Messgeber die Torsion der Tretlagerwelle und/oder der Torsionshülse ermittelt werden. Insbesondere ist es bei Verwendung der Torsionshülse möglich, beidseitig das Drehmoment zu erfassen. Bei Anbringen einer der Messgeber an der Torsionshülse und der anderen der Messgeber an der Tretlagerwelle kann zudem eine platzsparende Anordnung der beiden Messgeber und dem Messaufnehmer im Zwischenraum zwischen der Tretlagerwelle und der Torsionshülse ermöglicht werden.

Gemäß einer weiteren Alternative der Erfindung ist der Rotationskörper als Torsionshülse ausgebildet, welche um eine Tretlagerwelle angeordnet ist, und welche mit einem ersten Ende an einem ersten Ende der Tretlagerwelle angeordnet ist, wobei der Abtrieb an einem dem ersten Ende gegenüberliegenden zweiten Ende der Torsionshülse erfolgt, wobei beide Messgeber an der Torsionshülse angeordnet sind. Auch die Torsionshülse stellt einen Rotationskörper dar, welcher dadurch, dass sie mit einem Ende an der Tretlagerwelle befestigt ist und mit dem anderen Ende den Abtrieb, welcher beispielsweise zum Hinterrad führt, bildet, ebenfalls tordiert wird. Das Anbringen beider Messgeber an der Torsionshülse ermöglicht eine einfache Befestigung der beiden Messgeber.

Gemäß einer vorteilhaften Ausgestaltung der Erfindung ist die Ebene der Felder der Ringe quer, insbesondere senkrecht, zur Rotationsachse des Rotationskörpers angeordnet. Eine derartige Anordnung der Ringe ermöglicht ein einfaches Nachrüsten des Rotationskörpers.

Vorteilhafterweise sind die Ringe als axialer Abschnitt einer zylindrischen Wandung ausgebildet und weisen eine in axialer Richtung ineinandergreifende Verzahnung auf, so dass auf einer umlaufenden Linie abwechselnd Felder des ersten Messgebers und des zweiten Messgebers angeordnet sind. Dies ermöglicht eine besonders platzsparende Anordnung der beiden Ringe. Diese Anordnung bietet sich insbesondere bei Reflexionslichtschranken oder magnetischen Messaufnehmern an.

Es sind gemäß einer bevorzugten Ausführungsform der Erfindung zusätzlich Mittel zur Bestimmung des Drehwinkels vorgesehen, welche insbesondere einen zusätzlichen Messgeber und einen zusätzlichen Messaufnehmer umfassen, so dass sowohl der absolute Drehwinkel als auch die Drehrichtung ermittelt werden können, wobei insbesondere bereits nach einer Drehung des Rotationskörpers um wenige Grad die Lage und das Drehmoment feststehen, ohne dass eine vollständige Umdrehung des Rotationskörpers vonnöten ist.

Die erfindungsgemäße Vorrichtung wird insbesondere zur Durchführung des erfindungsgemäßen Verfahrens eingesetzt.

Die Erfindung wird anhand der nachfolgenden Figuren ausführlich erläutert. Es zeigt

Fig. 1     eine schematische Darstellung eines ersten Ausführungsbeispiels einer erfindungsgemäßen Vorrichtung,

Fig. 2     einen Schnitt entlang der Linie A-B in Figur 1 mit einer ersten Alternative der Anordnung der beiden Messgeber, nämlich einer offenen Anordnung der beiden Messgeber, ohne den Messaufnehmer,

Fig. 3     einen Schnitt entlang der Linie A-B in Figur 1 mit einer zweiten Alternative der Anordnung der beiden Messgeber, nämlich einer teilweise verdeckten Anordnung der beiden Messgeber, ohne den Messaufnehmer,

Fig. 4     eine schematische Darstellung eines zweiten Ausführungsbeispiels einer erfindungsgemäßen Vorrichtung,

Fig. 5     einen Schnitt entlang der Linie A-B in Figur 4 ohne den Messaufnehmer,

Fig. 6a     das durch den Messaufnehmer bei offener Anordnung der Messgeber beispielsweise gemäß Figur 2 oder 5 erzeugte Rechtecksignal ohne anliegendes Drehmoment mit einer ersten Möglichkeit der Flankenzuordnung,

Fig. 6b     das durch den Messaufnehmer bei offener Anordnung der Messgeber beispielsweise gemäß Figur 2 oder 5 erzeugte Rechtecksignal mit anliegendem Drehmoment mit der Flankenzuordnung gemäß Figur 6b,

Fig. 6c     das durch den Messaufnehmer bei offener Anordnung der Messgeber beispielsweise gemäß Figur 2 oder 5 erzeugte Rechtecksignal ohne anliegendes Drehmoment mit einer zweiten Möglichkeit der Flankenzuordnung,

Fig. 6d     das durch den Messaufnehmer bei offener Anordnung der Messgeber beispielsweise gemäß Figur 2 oder 5 erzeugte Rechtecksignal ohne anliegendes Drehmoment mit einer dritten Möglichkeit der Flankenzuordnung,

Fig. 6e     erster Teil eines Ablaufdiagramms zur Bestimmung des Drehmoments aus den Signalen gemäß Figur 6a und 6b oder 6c oder 6d,

Fig. 6f     zweiter Teil eines Ablaufdiagramms zur Bestimmung des Drehmoments aus den Signalen gemäß Figur 6a und 6b oder 6c und 6d,

Fig. 7     das durch den Messaufnehmer bei teilweise verdeckter Anordnung der Messgeber beispielsweise gemäß Figur 3 erzeugte Rechtecksignal ohne anliegendes Drehmoment,

Fig. 8     eine schematische Darstellung eines dritten Ausführungsbeispiels einer erfindungsgemäßen Vorrichtung,

Fig. 9     einen Schnitt entlang der Linie A-B in Figur 8 ohne den Messaufnehmer,

Fig. 10     das durch den Messaufnehmer der Vorrichtung gemäß Figur 8 erzeugte Rechtecksignal,

Fig. 11     das durch den zusätzlichen Messaufnehmer der Vorrichtung gemäß Figur 8 erzeugte Signal,

Fig. 12     eine alternative Ausführungsform der Messgeber,

Fig. 13a     das durch den Messaufnehmer bei Anordnung der Messgeber gemäß Figur 12 erzeugte Rechtecksignal ohne anliegendes Drehmoment,

Fig. 13b     das durch den Messaufnehmer bei Anordnung der Messgeber gemäß Figur 12 erzeugte Rechtecksignal mit anliegendem Drehmoment,

Fig. 13c    ein Ablaufdiagramm zur Bestimmung des Drehmoments aus den Signalen gemäß Figur 13a und 13b,

Fig. 14    eine weitere alternative Ausführungsform der Messgeber,

Fig. 15    das durch den Messaufnehmer bei Anordnung der Messgeber gemäß Figur 14 erzeugte Rechtecksignal,

Fig. 16    das mit dem Impulsgeber gemäß Figur 14 erzeugte Triggersignal,

Fig. 17    eine weitere alternative Ausführungsform der Messgeber,

Fig. 18a    das durch den Messaufnehmer bei Anordnung der Messgeber gemäß Figur 17 erzeugte Rechtecksignal ohne anliegendes Drehmoment,

Fig. 18b    das durch den Messaufnehmer bei Anordnung der Messgeber gemäß Figur 17 erzeugte Rechtecksignal ohne anliegendes Drehmoment mit Bestimmung des Drehwinkels,

Fig. 18c    das durch den Messaufnehmer bei Anordnung der Messgeber gemäß Figur 17 erzeugte Rechtecksignal mit anliegendem Drehmoment,

Fig. 18d    ein Ablaufdiagramm zur Bestimmung des Drehmoments und des Drehwinkels aus den Signalen gemäß Figur 18a, 18b und 18c,

Fig. 18e    eine Darstellung zur Bestimmung des Drehwinkels und der Drehrichtung aus den Signalen gemäß Figur 18a, 18b und 18c,

Fig. 19    eine schematische Darstellung eines weiteren Ausführungsbeispiels einer erfindungsgemäßen Vorrichtung,

Fig. 20    einen Schnitt entlang der Linie A-B in Figur 19,

Fig. 21    eine perspektivische Ansicht zweier axial ineinander verzahnter Messgeber,

Fig. 22    eine schematische Darstellung eines weiteren Ausführungsbeispiels einer erfindungsgemäßen Vorrichtung und

Fig. 23    eine schematische Darstellung eines weiteren Ausführungsbeispiels einer erfindungsgemäßen Vorrichtung.

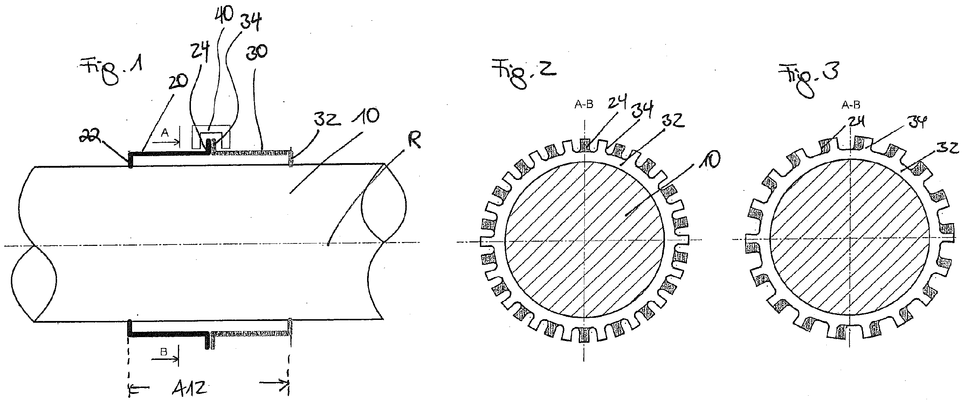

Figur 1 zeigt eine schematische Darstellung eines ersten Ausführungsbeispiels einer erfindungsgemäßen Vorrichtung. Die Vorrichtung weist einen Rotationskörper 10 auf, welcher beispielsweise als Tretlagerwelle beispielsweise eines Fahrrads, Ergometers oder Indoorbikes ausgebildet sein kann. An dem Rotationskörper 10 sind in einem axialen Abstand A12 ein erster Messgeber 20 und ein zweiter Messgeber 30 befestigt. Der erste Messgeber 20 ist dabei über ein Befestigungselement 22, der zweite Messgeber 30 über ein Befestigungselement 32 an dem Rotationskörper 10 befestigt. Sowohl der erste Messgeber 20 als auch der zweite Messgeber 30 weist jeweils einen den Rotationskörper 10 umschließenden Ring 24, 34 auf, welche alternierend unterschiedliches Signalverhalten aufweisende Felder aufweisen. Die Felder können beispielsweise durch optische Strukturen, induktive, magnetische oder kapazitive Elemente oder ähnliches gebildet werden. In einer einfachen Ausgestaltung sind die Ringe 24, 34, wie in Figur 2 oder 3 dargestellt, als ringförmige Elemente mit radial an den ringförmigen Elementen angeordneten, vorzugsweise im gleichen Winkelabstand zueinander angeordneten, rechteckigen Elementen ausgebildet, welche beispielsweise aus einem lichtundurchlässigen oder reflektierenden Material gebildet sind, um zu den dazwischen angeordneten Leerräumen unterschiedliches Signalverhalten zu erzeugen. Die rechteckigen Elemente bilden somit eine Art von Feldern, die dazwischen angeordneten Leerräume eine andere Art von Feldern. Je nach Messprinzip erzeugen die rechteckigen Elemente ein Signal, beispielsweise wenn mit einem optischen Sensor auf ein reflektierendes Element geschaut wird, welches von der gleichen Seite angeleuchtet wird, oder die dazwischen angeordneten Leerräume ein Signal, beispielsweise wenn die Messgeber zwischen einer Lichtquelle und einem optischen Sensor angeordnet sind. Im nachfolgenden werden die rechteckigen Elemente als signalerzeugende Elemente angesehen, d. h. sie erzeugen einen Impuls im Rechtecksignal mit einer ansteigenden Flanke und einer darauffolgenden fallenden Flanke. Wenn die dazwischen liegenden Leerräume die signalerzeugenden Elemente darstellen, kehren sich die Richtungen von steigenden und fallenden Flanken entsprechend um.

Die Ringe 24, 34 sind gemäß der in Figur 1 dargestellten Ausführungsform axial beabstandet zu den entsprechenden Befestigungselementen 22, 32 angeordnet, beispielsweise dadurch, dass das Befestigungselement 22 des ersten Messgebers 20 einendseitig an einer zylindrischen Hülse angeordnet ist, während der zugehörige Ring 24 des ersten Messgebers 20 an dem gegenüberliegenden Ende der zylindrischen Hülse angeordnet ist. In gleicher Art und Weise kann das Befestigungselement 32 des zweiten Messgebers 30 an einem Ende einer zylindrischen Hülse angeordnet sein, während der Ring 34 an dem gegenüberliegenden Ende der zylindrischen Hülse angeordnet ist.

Die Ringe 24, 34 sind in dieser Ausführungsform insbesondere als umlaufende Kragen an der zylindrischen Hülse ausgebildet und somit insbesondere radial ausgerichtet, wobei insbesondere die Ebene durch die Felder der Ringe 24, 34 senkrecht zur Rotationsachse R des Rotationskörpers 10 verläuft.

Die Ringe 24, 34 der beiden Messgeber 20, 30 sind bei Anordnung der Messgeber 20, 30 an dem Rotationskörper 10 mit kleinem axialen Abstand zueinander angeordnet. Der axiale Abstand zwischen den beiden Ringen 24, 34 ist nahezu 0. Die beiden Ringe 24, 34 sind insbesondere derart zueinander angeordnet, dass sie sich auch bei einer relativen Rotation der beiden Messgeber 20, 30 zueinander gerade nicht berühren. Insbesondere ist der Abstand zwischen den Ringen 24, 34 signifikant kleiner als der axiale Abstand A12 zwischen den beiden Befestigungselementen 22, 32, beispielsweise weniger als 10% des axialen Abstands A12, insbesondere weniger als 5% oder bevorzugt sogar weniger als 1% des axialen Abstands A12.

Der Messaufnehmer 40 ist derart angeordnet, dass er ein Ausgangssignal aufnimmt, welches durch beide Messgeber 20, 30 beeinflusst ist. Der Messaufnehmer 40 kann auf verschiedenen physikalischen Prinzipien, beispielsweise optischen, induktiven, magnetischen oder kapazitiven Prinzipien, beruhen und weist dazu insbesondere einen Sender und einen Empfänger auf. Eine einfache konstruktive Ausgestaltung ergibt sich, wenn der Messaufnehmer 40 auf einem optischen Prinzip beruht, welches in einer Ausführungsform im Durchlichtverfahren oder in einer anderen Ausführungsform im Reflexionsverfahren arbeitet, wobei beim Durchlichtverfahren zwischen dem Sender und dem Empfänger des Messaufnehmers 40 beide Ringe 24, 34 angeordnet sind. Aus dem Ausgangssignal des Messaufnehmers 40 wird ein Rechtecksignal gebildet, wobei eine steigende oder fallende Flanke zwischen zwei benachbarten Feldern unterschiedlichen Signalverhaltens erzeugt wird.

Figur 2 zeigt ein Ausführungsbeispiel der Ringe 24, 34, wobei bei dieser relativen Anordnung zwischen dem Ring 24 des ersten Messgebers 20 und dem Ring 34 des zweiten Messgebers 30 jedes einzelne der an den ringförmigen Elementen angeordneten abschattenden Elemente sowohl mit der Vorderkante als auch mit der rücklaufenden Kante eine steigende oder fallende Flanke im Rechtecksignal erzeugt, so dass diese Anordnung als offene Anordnung bezeichnet wird.

Bei der in Figur 3 dargestellten Anordnung der Ringe 24, 34 verdecken die abschattenden Elemente des Rings 24 teilweise die abschattenden Elemente des Rings 34, so dass von einer teilweise verdeckten Anordnung gesprochen werden kann.

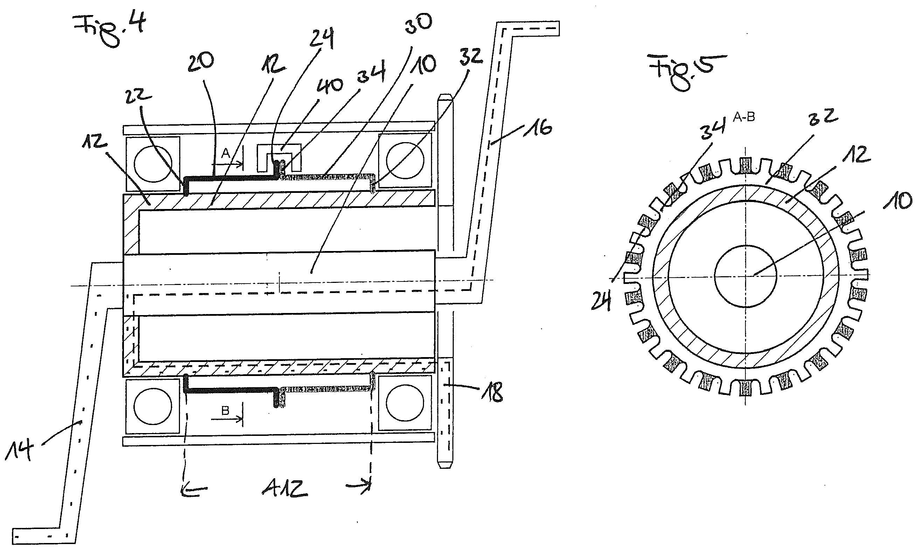

Figur 4 zeigt eine schematische Darstellung eines weiteren Ausführungsbeispiels einer erfindungsgemäßen Vorrichtung mit einem als Tretlagerwelle ausgebildeten Rotationskörper 10, an welcher an den beiden Enden jeweils eine Kurbel 14, 16 insbesondere um 180° gegeneinander versetzt angeordnet ist. An der Tretlagerwelle 10 ist ein Rotationskörper 12 angeordnet, der insbesondere als Torsionshülse ausgebildet ist. Die Torsionshülse ist einseitig an einem Ende der Tretlagerwelle 10 angeordnet und umschließt die Tretlagerwelle 10 koaxial. Über die Kurbeln 14, 16 werden die Pedalkräfte der beiden Kurbeln 14, 16 in die Torsionshülse eingeleitet und erzeugen dabei ein Drehmoment. Beide Kraftverläufe der Kurbeln 14, 16 münden in einem Abtrieb 18, der an dem Ende der Torsionshülse angeordnet ist, welches nicht mit der Tretlagerwelle 10 verbunden ist. Der Abtrieb 18 ist beispielsweise als Kettenblatt eines Fahrrads, Ergometers oder Indoorbikes ausgebildet. Der Abtrieb 18 führt beispielsweise zum Hinterrad eines Fahrrads, Ergometers oder Indoorbikes und erzeugt insbesondere ein Gegendrehmoment an der Torsionshülse. Durch das über die beiden Kurbeln 14, 16 eingeleitete Drehmoment und das über den Abtrieb 18 wirkende Gegendrehmoment wird der Rotationskörper 12, insbesondere die Torsionshülse, tordiert.

An der Torsionshülse sind in einem axialen Abstand A12 zwei Messgeber 20, 30 wie anhand von Figur 1 beschrieben angeordnet. Durch die drehmomentabhängige Tordierung der Torsionshülse ändert sich die Drehwinkellage der Felder des Rings 24 relativ zu den Feldern des Rings 34. Die Veränderung der Drehwinkellage der Felder zueinander ist daher ein Maß für das zu messende Drehmoment.

Dabei sollte berücksichtigt werden, dass die Tordierung möglichst nicht größer als der halbe Winkelabstand der Felder der Ringe 24, 34 sein sollte, da sich ansonsten Fehler in der Drehmomentbestimmung ergeben könnten. Vorzugsweise ist vorgesehen, in einem solchen Fall ein Fehlersignal auszugeben.

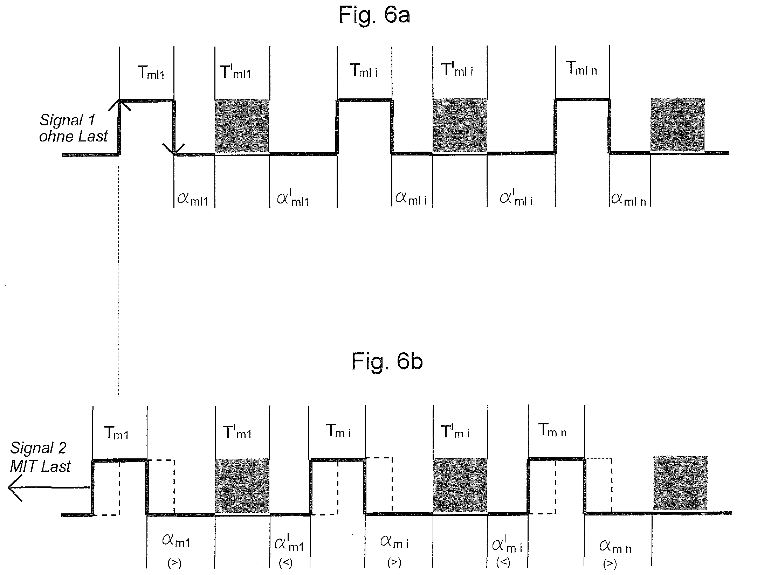

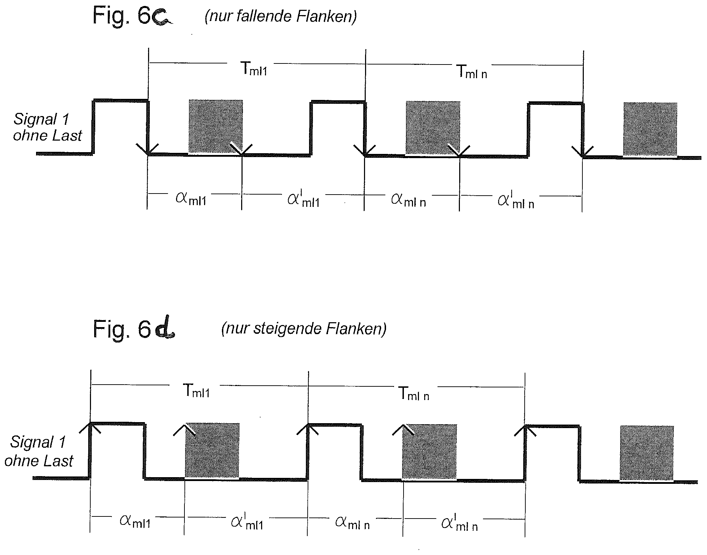

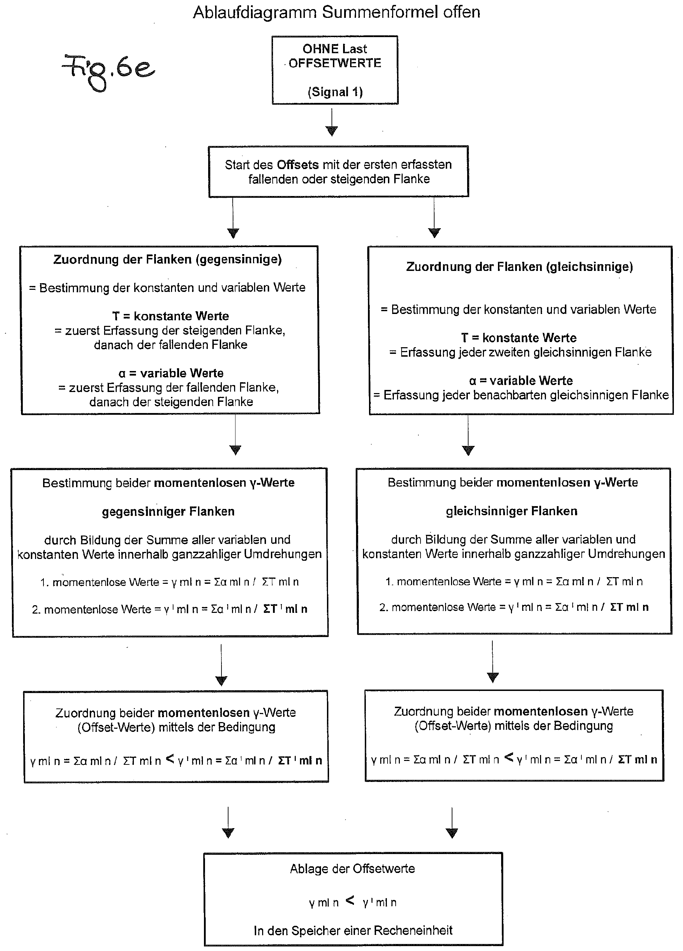

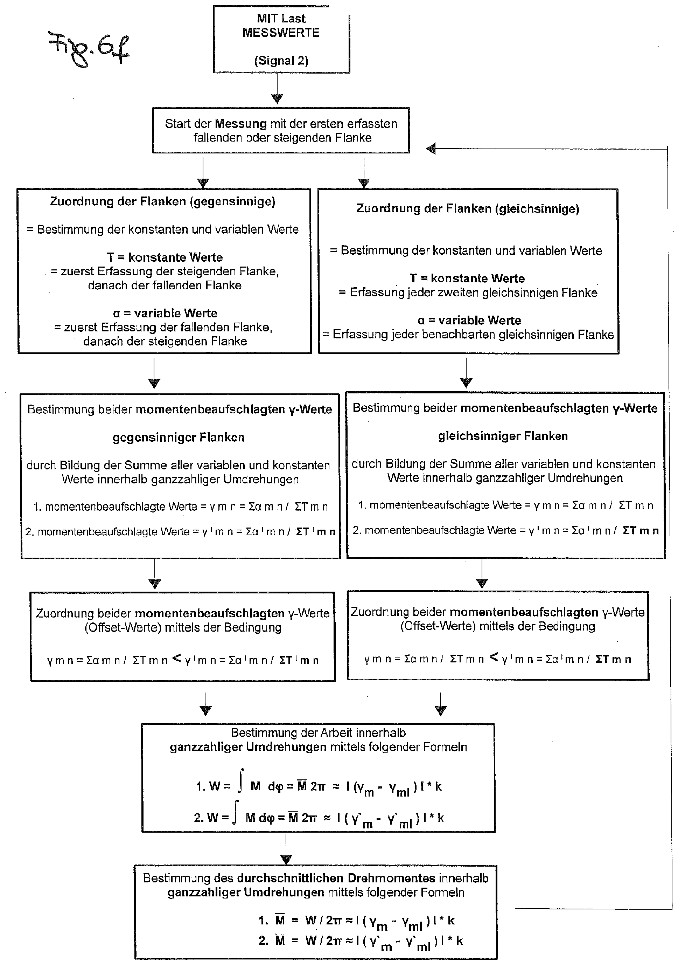

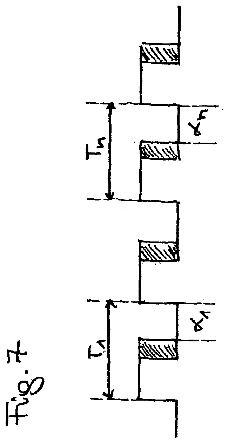

Figur 5 zeigt einen Schnitt entlang der Linie A-B durch Figur 4, anhand welcher die Anordnung der beiden Messgeber 20, 30 an dem als Torsionshülse ausgebildeten Rotationskörper 12 erkennbar ist. Wie in Figur 5 dargestellt, sind die Ringe 24, 34 der Messgeber 20, 30 in offener Anordnung angeordnet. Der Messaufnehmer 40 erzeugt ein Rechtecksignal, für welches ein Beispiel in den Figuren 6 und 7 dargestellt ist.

Es besteht nun bei einer offenen Anordnung die Möglichkeit, wie anhand von Figur 6 nachfolgend beschrieben das Drehmoment zu bestimmen.

In Figur 6 dargestellt sind verschiedene Möglichkeiten, die Flanken und Impulse des Rechtecksignals den entsprechenden Strukturen der Messgeber 20, 30 zuzuordnen, wobei jeder zweite Impuls einem der beiden Messgeber 20, 30 zugeordnet wird, während die jeweils anderen Impulse dem anderen der beiden Messgeber 30, 20 zugeordnet werden. Da die Messwertaufnahme zu beliebigen Zeitpunkten starten kann, ist nicht eindeutig, welche Impulse bzw. Flanken zu welchem Messgeber 20, 30 gehören. Eine derartige Zuordnung ist jedoch auch nicht zwingend notwendig.

Die Figuren 6a und 6b stellen eine erste Möglichkeit der Flankenzuordnung basierend auf nur gegensinnigen Flanken dar.

Die Breiten, das heißt die Flankenabstände zwischen einer steigenden und einer darauffolgenden fallenden Flanke jedes zweiten Impulses, der dem einen Messgeber 20, 30 zugeordneten Impulse werden mit $T_1,..., T_n$ bezeichnet, während die Breiten, das heißt die Flankenabstände zwischen einer steigenden und einer darauffolgenden fallenden Flanke der jeweils anderen Impulse, der dem zweiten Messgeber 30 zugeordneten Impulse mit $T_1',..., T_n'$ bezeichnet werden. Mit n ist an dieser Stelle die Zahl der Felder einer Art, insbesondere die Signalerzeugenden Felder, eines Rings 24, 34 bezeichnet. Dabei sollen die $T_1,..., T_n$ und $T_1',..., T_n'$ die auch bei einer Beaufschlagung mit einem Drehmoment konstanten Werte bezeichnen, welche insbesondere durch Flankenabstände zweier aufeinanderfolgender Flanken definiert sind, die durch denselben Ring hervorgerufen werden.

In alternativen, in Figur 6c und 6d dargestellten Ausführungsformen können die $T_1,..., T_n$ und $T_1',..., T_n'$ auch als Flankenabstand zwischen einer Flanke und der übernächsten gleichsinnigen Flanke bestimmt werden und somit eine Periode wiedergeben, welche beispielsweise einen Impuls eines der Messgeber, einen darauffolgenden Zwischenraum zwischen zwei Impulsen, den darauffolgenden Impuls sowie einen weiteren darauffolgenden Zwischenraum umfassen. Dabei könnte insbesondere $T_i = T_i'$ sein. Dabei werden die $T_1,..., T_n$ und $T_1',..., T_n'$ bei dem in Figur 6c dargestellten Ausführungsbeispiel als der Abstand zwischen einer fallenden und der übernächsten fallenden Flanke bestimmt, während die $T_1,..., T_n$ und $T_1',..., T_n'$ bei dem in Figur 6d dargestellten Ausführungsbeispiel als der Abstand zwischen einer steigenden und der übernächsten steigenden Flanke bestimmt werden. Grundsätzlich wäre es auch möglich, die $T_i$ ausgehend von einer steigenden und die $T_i'$ ausgehend von einer fallenden Flanke oder umgekehrt oder ausgehend von aufeinanderfolgenden steigenden oder fallenden Flanken zu bestimmen.

In den Figuren 6a und 6b werden die Flankenabstände zwischen den Impulsen, d. h. insbesondere die Abstände zwischen einer fallenden Flanke und einer darauffolgenden steigenden Flanke, werden mit $\alpha_1,..., \alpha_n$ oder mit $\alpha_1',..., \alpha_n'$ bezeichnet, wobei der auf einen Impuls $T_1,..., T_n$ folgende Flankenabstand mit $\alpha_1,..., \alpha_n$ bezeichnet wird, während der auf einen Impuls $T_1',..., T_n'$ folgende Flankenabstand mit $\alpha_1',..., \alpha_n'$ bezeichnet wird. Die Flankenabstände $\alpha_1,..., \alpha_n$ oder mit $\alpha_1',..., \alpha_n'$ variieren während der Beaufschlagung mit einem Drehmoment aufgrund der Torsion der Tretlagerwelle oder der Torsionshülse, da sich die Ringe 24, 34 gegeneinander verdrehen. Damit sollen die $\alpha_1,..., \alpha_n$ und $\alpha_1',..., \alpha_n'$ die bei einer Beaufschlagung mit einem Drehmoment variierenden Werte bezeichnen, welche insbesondere durch Flankenabstände zweier aufeinanderfolgender Flanken definiert sind, die durch unterschiedliche Ringe hervorgerufen wurde.

In alternativen, in den Figuren 6c und 6d dargestellten Ausgestaltungen können die Flankenabstände $\alpha_1,..., \alpha_n$ oder $\alpha_1',..., \alpha_n'$ auch als Abstände zweier aufeinanderfolgender gleichsinniger Flanken, insbesondere als Abstände zweier aufeinanderfolgender fallender Flanken (vgl. Figur 6c) oder als Abstände zweier aufeinanderfolgender steigender flanken (vgl. Figur 6d) bestimmt werden.

Wesentlich ist für alle in den Figuren 6a bis 6d oder weitere, nicht dargestellte Möglichkeiten der Flankenzuordnung, dass die konstanten Werte als Abstände von Flanken bestimmt werden, welche durch denselben Ring hervorgerufen werden und somit nur von der Geometrie des entsprechenden Rings, nicht jedoch von der Verdrehung der beiden Ringe gegeneinander und somit nicht vom ausgeübten Drehmoment abhängig sind, und die variablen Werte $\alpha_1,..., \alpha_n$ oder $\alpha_1',..., \alpha_n'$ als Abstände von Flanken bestimmt werden, die durch unterschiedliche Ringe hervorgerufen werden, und welche somit von der Verdrehung der beiden Ringe gegeneinander und damit vom ausgeübten Drehmoment abhängig sind.

Es ist zu beachten, dass $T_i$ sowohl die momentlosen Werte $T_{mli}$ als auch die momentbehafteten Werte $T_{mi}$ jeweils von beiden Messgebern 20, 30 und ebenso $\alpha_i$ sowohl die momentlosen Werte $\alpha_{mli}$ als auch die momentbehafteten Werte $\alpha_{mi}$ jeweils von beiden Messgebern 20, 30 umfassen soll, soweit nicht explizit etwas anderes angegeben ist.

Zur Bestimmung der erzeugten Drehmomente werden zunächst während der momentenlosen Rotation der Torsionshülse oder der Tretlagerwelle die momentenlosen, das heißt lastenfreien, $\gamma_{ml}$-Werte für einen der beiden Messgeber 20, 30 und $\gamma'_{ml}$-Werte für den anderen der beiden Messgeber 30, 20 mittels folgender Formeln bestimmt:

$$\gamma_{ml} = (\alpha_{ml1} + \alpha_{ml2} + ... + \alpha_{mln}) / (T_{ml1} + T_{ml2} + ... + T_{mln})$$

$$= \sum_{i=1}^{n} \alpha_{mli} / \sum_{i=1}^{n} T_{mli}$$

und

$$\gamma'_{m1} = (\alpha'_{m11} + \alpha'_{m12} + \ldots + \alpha'_{m1n})/(T'_{m11} + T'_{m12} + \ldots + T'_{m1n})$$

$$= \sum_{i=1}^{n} a'_{m1i} / \sum_{i=1}^{n} T'_{m1i}$$

Die $\gamma_{ml}$-Werte und $y'_{ml}$-Werte werden derart zugeordnet, dass sie folgender Bedingung genügen, damit eine korrekte Bestimmung des Drehmoments ermöglicht wird:

$$\gamma_{m1} < \gamma'_{m1}$$

Bei Einleitung eines Drehmomentes wird der Rotationskörper 10 und der Rotationskörper 12 verdreht, die veränderten Flankenabstände $\alpha_{ml},\ldots, \alpha_{mn}$ und $\alpha_{m1}',\ldots, \alpha_{mn}'$ ermittelt und die mit Moment behafteten $\gamma_m$-Werte für den einen der beiden Messgeber 20, 30 und $\gamma'_m$-Werte für den anderen der beiden Messgeber 30, 20 folgendermaßen bestimmt:

$$\gamma_m = (\alpha_{m1} + \alpha_{m2} + \ldots + \alpha_{mn})/(T_{m1} + T_{m2} + \ldots + T_{mn})$$

$$= \sum_{i=1}^{n} a_{mi} / \sum_{i=1}^{n} T_{mi}$$

und

$$\gamma'_m = (\alpha'_{m1} + \alpha'_{m2} + \ldots + \alpha'_{mn})/(T'_{m1} + T'_{m2} + \ldots + T'_{mn})$$

$$= \sum_{i=1}^{n} a'_{mi} / \sum_{i=1}^{n} T'_{mi}$$

Die $\gamma_m$-Werte und $\gamma'_m$-Werte werden derart zugeordnet, dass sie folgender Bedingung genügen, damit eine korrekte Bestimmung des Drehmoments ermöglicht wird:

$$\gamma_m < \gamma'_m$$

Die erzeugte Arbeit kann dann wie folgt bestimmt werden:

$$W = \int_0^{2\pi} M d\varphi = \bar{M} 2\pi \approx |(\gamma_m - \gamma_{m1})| k,$$

$$W' = \int_0^{2\pi} M' d\varphi = \bar{M}' 2\pi \approx |(\gamma'_m - \gamma'_{m1})| k,$$

wobei k eine Kalibrierkonstante und $\varphi$ der Drehwinkel des Rotationskörpers 10 oder 12 ist. Die erzeugten Drehmomente bestimmen sich wie folgt:

$$\bar{M} = W/2\pi \approx |(\gamma_m - \gamma_{m1})| k/2\pi$$

$$\bar{M}' = W'/2\pi \approx |(\gamma'_m - \gamma'_{m1})| k/2\pi.$$

Durch Addition der beiden Drehmomente $\bar{M}$ und $\bar{M}'$ lässt sich das gesamte Drehmoment bestimmen.

Ein Ablaufdiagramm, welches den beschriebenen Ablauf nochmals übersichtlich darstellt, zeigen Figuren 6e und 6f. Figur 6e zeigt den ersten Teil des Ablaufdiagramms, in welchem die lastenfreien Werte bestimmt werden, wobei zwischen einer sogenannten gegensinnigen Flankenzuordnung, welche der Flankenzuordnung gemäß der Figuren 6a und 6b entspricht, und einer sogenannten gleichsinnigen Flankenzuordnung, welche der Flankenzuordnung entweder gemäß Figur 6c oder gemäß Figur 6d entspricht, unterschieden wird. Figur 6f zeigt den zweiten Teil des Ablaufdiagramms, in welchem die momentbeaufschlagten Werte je nach Flankenzuordnung bestimmt werden und unter Berücksichtigung der gemäß dem in Figur 6e dargestellten Ablaufdiagramm bestimmten momentenfreien Werte das Drehmoment bestimmt wird.

Es besteht bei einer teilweise verdeckten Anordnung die Möglichkeit, wie anhand Figur 7 nachfolgend beschrieben das Drehmoment zu bestimmen.

Wie in Figur 7 dargestellt, umfasst jeder der Impulse Anteile eines signalerzeugenden Elements des Rings 24 des ersten Messgebers 20 und Anteile eines signalerzeugenden Elements des Rings 34 des zweiten Messgebers 30. Dabei ist zu beachten, dass im tatsächlichen Signalverlauf des ermittelten Rechtecksignals die dunkel dargestellten Felder nicht sichtbar sind. Eine Unterscheidung zwischen Impulsen oder Anteilen von Impulsen eines Messgebers 20, 30 von Impulsen des anderen Messgebers 20, 30 ist nicht möglich. In dieser Anordnung werden die Perioden als die konstanten Werte angenommen und mit $T_1,..., T_n$ bezeichnet, wobei es sich um die Flankenabstände zwischen zwei gleichsinnigen Flanken, insbesondere zwei steigenden Flanken handelt. Die Flankenabstände zwischen den Impulsen werden mit $\alpha_1,..., \alpha_n$ bezeichnet, wobei es sich insbesondere um die Flankenabstände zwischen zwei gegensinnigen, insbesondere zwischen einer fallenden und einer darauffolgenden steigenden Flanke, handelt. Es bezeichnet n beispielsweise die Zahl der Felder einer Art, beispielsweise die Signalerzeugenden Felder, eines der Ringe 24, 34.

Es wird anschließend das momentenlose Verhältnis mit folgender Formel

$$\gamma_{m1} = (\alpha_{m11} + \alpha_{m12} + ... + \alpha_{m1n}) / (T_{m11} + T_{m12} + ... + T_{m1n})$$

$$= \sum_{i=1}^{n} a_{m1i} / \sum_{i=1}^{n} T_{m1i}$$

sowie das momentbeaufschlagte Verhältnis mit folgender Formel

$$\gamma_m = (\alpha_{m1} + \alpha_{m2} + ... + \alpha_{mn}) / (T_{m1} + T_{m2} + ... + T_{mn})$$

$$= \sum_{i=1}^{n} a_{mi} / \sum_{i=1}^{n} T_{mi}$$

bestimmt. Die Arbeit an dem momentbeaufschlagten Rotationskörper 10, 12 wird bestimmt aus der Gleichung

$$W = \int_0^{2\pi} M d\varphi = \bar{M} 2\pi \approx (\gamma_m - \gamma_{m1}) k,$$

wobei k eine Kalibrierkonstante und $\varphi$ der Drehwinkel des Rotationskörpers 10 oder 12 ist. Schließlich wird das auf den Rotationskörper 10, 12 ausgeübte durchschnittliche Drehmoment aus der Gleichung

$$\bar{M} = W / 2\pi \approx (\gamma_m - \gamma_{m1}) k / 2\pi$$

bestimmt.

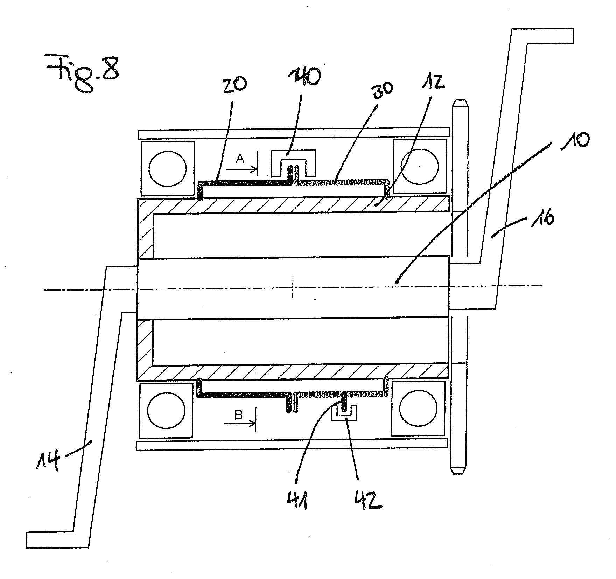

Figur 8 zeigt die Vorrichtung gemäß Figur 4, welche einen zusätzlichen Messgeber 41 und einen Messaufnehmer 42 aufweist, welche zur Bestimmung der Winkellage verwendet werden. Der zusätzliche Messgeber 41 ist dabei an dem zweiten Messgeber 30 angeordnet und somit relativ zu diesem fixiert. Der zusätzliche Messaufnehmer 42 ist ausschließlich dem zusätzlichen Messgeber 41 zugeordnet und detektiert dessen Drehung bei Drehung des Rotationskörpers 10 oder des Rotationskörpers 12.

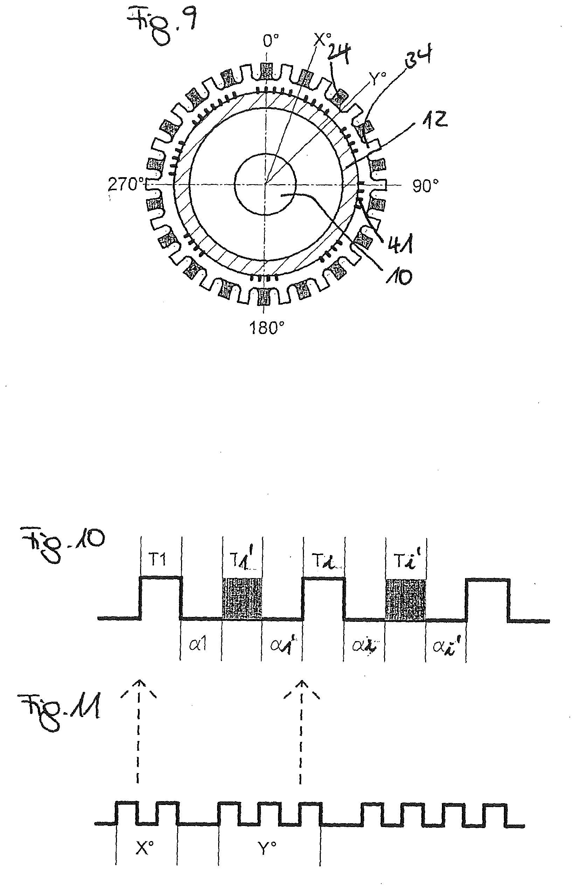

Figur 9 zeigt einen Schnitt entlang der Linie A-B in Figur 8, in welchem der zusätzliche Messgeber 41 erkennbar ist. Figur 10 zeigt das mit dem Messaufnehmer 40 erzeugte Rechtecksignal, Figur 11 zeigt das mit dem zusätzlichen Messaufnehmer 42 erzeugte Rechtecksignal. Der zusätzliche Messgeber 41 weist ebenfalls Felder unterschiedlichen Signalverhaltens auf einem Ring auf, wobei beispielsweise abschattende Elemente mit lichtdurchlässigen Elementen abwechselnd angeordnet sein können. Die abschattenden Elemente haben vorzugsweise gleiche Breite, während der Winkelabstand zueinander unterschiedlich ausgestaltet sein kann. Insbesondere erzeugen die abschattenden Elemente des Messgebers 41 eine erkennbare Abfolge von Signalen, durch welche eine Bestimmung der relativen Winkellage des Messgebers 41 ermöglicht wird.

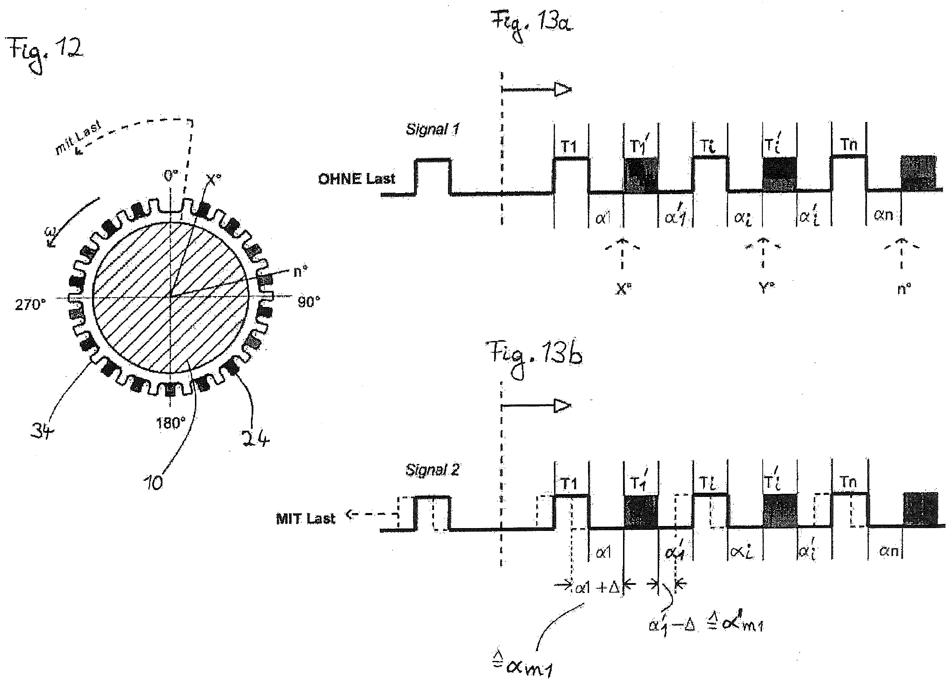

Figur 12 zeigt ein alternatives Ausführungsbeispiel zweier Messgeber 20, 30, bei welchen der Messgeber 20 derart ausgestaltet ist, dass ein abschattendes Element in dem Ring 24 des ersten Messgebers 20 fehlt, wodurch eine eindeutige Signalstruktur derart erzeugt wird, dass eine Bestimmung einer Nullposition und damit der Drehwinkellage möglich ist (vgl. Figur 13a, 13b). Insbesondere kann ein derartiges fehlendes Element auch dazu verwendet werden, die Umdrehungen zu zählen und/oder die Messaufnahme zu starten.

Figur 9 und 12 zeigen auch die Möglichkeit der Messung des Drehmomentes bei einem bestimmten Drehwinkel der Torsionshülse. Die Drehwinkellage wird mittels des zusätzlichen Messgebers 41 und des zusätzlichen Messaufnehmers 42 bestimmt. Hierbei kann beispielsweise ein bekanntes Verfahren wie ein Gray-Code oder ein Nonius-Verfahren angewendet werden. Dadurch lassen sich dem zu messenden Drehmoment sowohl ein absoluter Drehwinkel als auch die Drehrichtung zuordnen.

Das drehwinkelabhängige Drehmoment kann wie folgt bestimmt werden. Während der momentenlosen Rotation der Torsionshülse werden alle einzelnen momentenlosen $\gamma_{ml}$-Werte an der dazu zeitgleich ermittelten Position wie folgt berechnet:

$$\gamma_{ml1} = \alpha_{ml1}/T_{ml1} \quad \text{(an Position X°)}$$

$$\gamma_{ml2} = \alpha_{ml2}/T_{ml2} \quad \text{(an Position Y°)}$$

$$\dots$$

$$\gamma_{mln} = \alpha_{mln}/T_{mln} \quad \text{(an Position n°)}$$

und insbesondere

$$\gamma_{mli} = \alpha_{mli}/T_{mli} \quad \text{(an Position i°)}$$

Entsprechend wird bei Einleitung eines Drehmomentes die Tretlagerwelle und/oder die Torsionshülse verdreht, die veränderte Phasenlage ermittelt und alle einzelnen mit Last beaufschlagten $\gamma_m$-Werte an der dazu zeitgleich ermittelten Position berechnet :

$$\gamma_{m1} = \alpha_{m1}/T_{m1} \quad \text{(an Position X°)}$$

$$\gamma_{m2} = \alpha_{m2}/T_{m2} \quad \text{(an Position Y°)}$$

$$\dots$$

$$\gamma_{mn} = \alpha_{mn}/T_{mn} \quad \text{(an Position n°)}$$

und insbesondere

$$\gamma_{mi} = \alpha_{mi}/T_{mi} \quad \text{(an Position i°)}$$

Mittels folgender Formeln kann dann das in der Torsionshülse wirkende Drehmoment über die Drehwinkellage ermittelt werden, wobei k eine material- und geometrieabhängige Kalibrierkonstante ist:

$$M_{1(x°)} = |(\gamma_{m1} - \gamma_{ml1})| k$$

$$M_{2(y°)} = |(\gamma_{m2} - \gamma_{ml2})| k$$

$$\dots$$

$$M_{n(n°)} = |(\gamma_{mn} - \gamma_{mln})| k$$

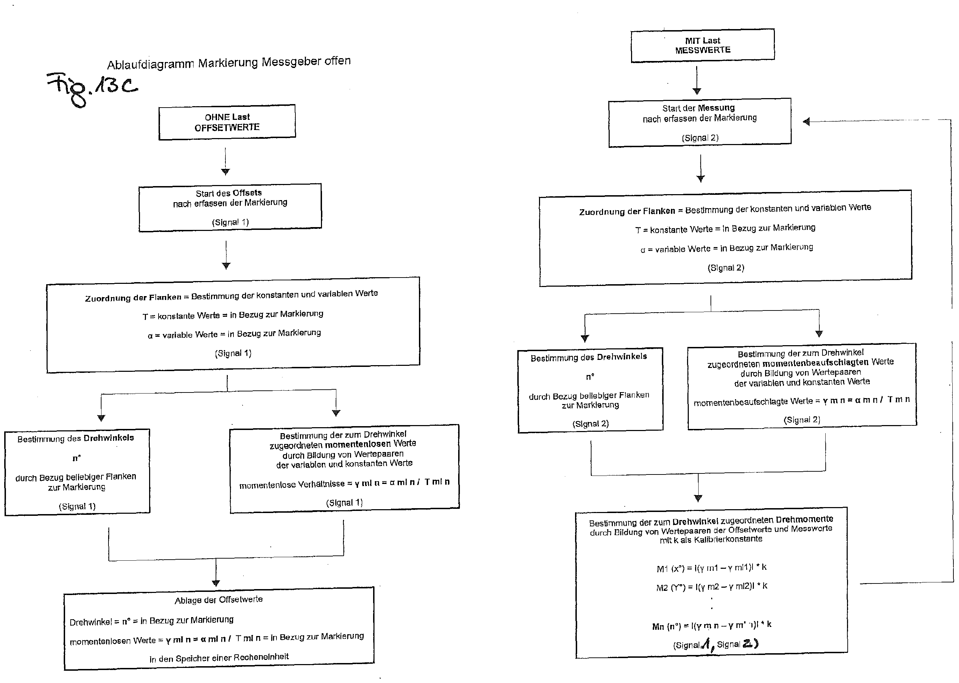

Ein Ablaufdiagramm, welches den beschriebenen Ablauf zur Bestimmung der drehwinkelabhängigen Drehmomente nochmals übersichtlich darstellt, zeigt Figur 13c.

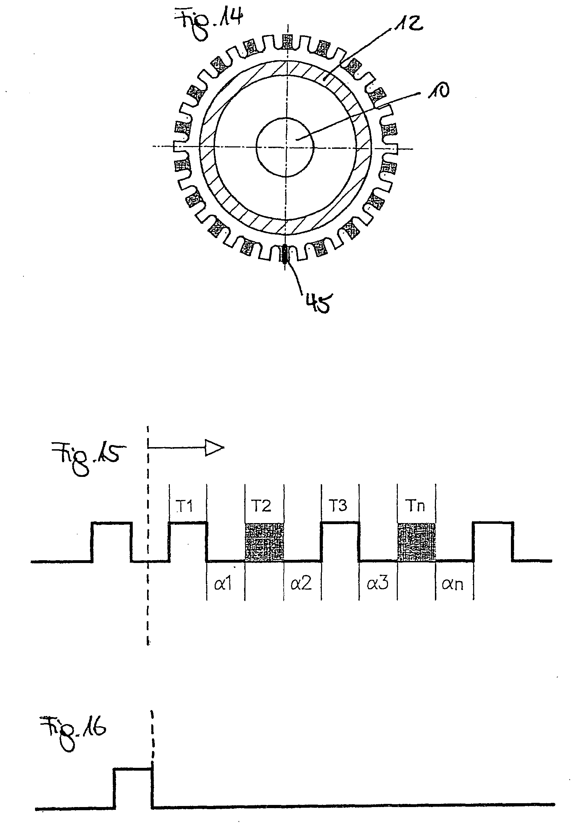

Figur 14 zeigt ein weiteres Ausführungsbeispiel für die Ausgestaltung der Messgeber 20, 30, wobei eines der Felder des Messgebers 20 eine zusätzliche Komponente 45, beispielsweise einen Trigger, aufweist, die einen wie in Figur 16 dargestellten Triggerimpuls auslöst, welcher den Messwertvorgang startet und/oder eine vollständige Umdrehung signalisiert und/oder die Drehwinkellage bestimmen lässt.

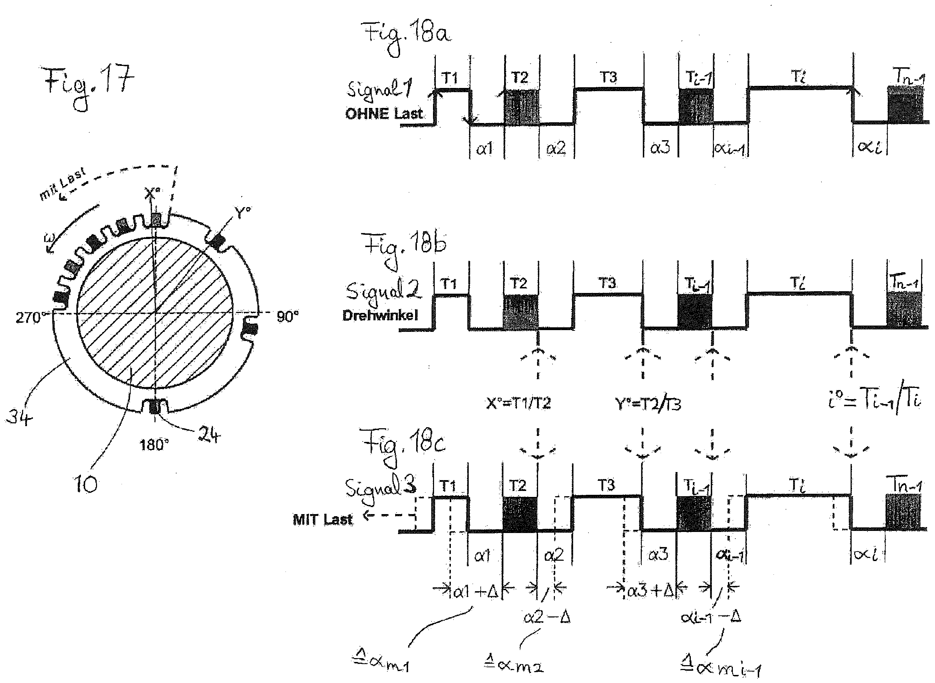

Figur 17 zeigt ein weiteres Ausführungsbeispiel der Ringe 24, 34 der Messgeber 20, 30 wobei an einem der Ringe, beispielsweise dem Ring 34 des zweiten Messgebers 30, abschattende Elemente unterschiedlicher Breite angeordnet sind, so dass die Erfassung der Drehwinkellage, der Drehrichtung und des Drehmoments durch ein einziges Signal, nämlich das durch den Messaufnehmer 40 bestimmte Rechtecksignal, ermöglicht wird. Das System wird daher sehr wirtschaftlich und kaum störanfällig.

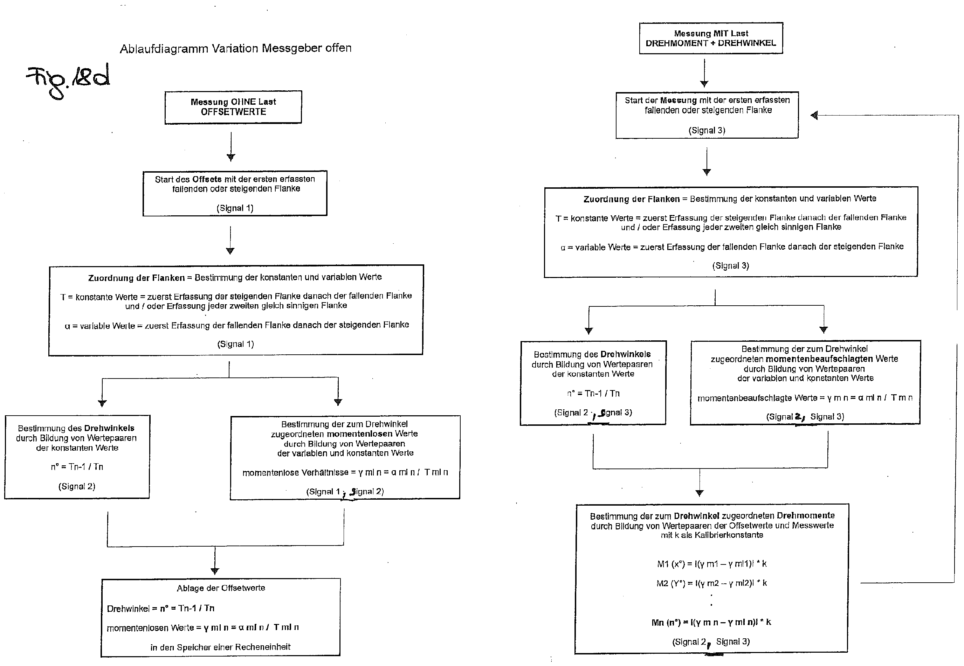

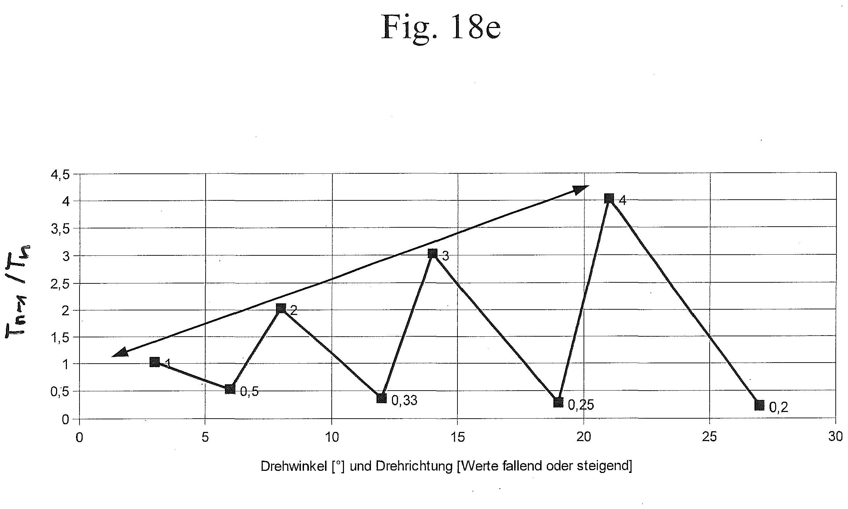

Figur 18 zeigt die Messung des Drehmomentes und der Drehwinkellage durch eine Variation der Geometrie des Rings 34 des zweiten Messgebers 30 gemäß Figur 17. Figur 18a zeigt das vom Messwertnehmer 40 ermittelte Rechtecksignal ohne Drehmomentbeaufschlagung, Figur 18c zeigt das vom Messwertnehmer 40 ermittelte Rechtecksignal mit Drehmomentbeaufschlagung. Figur 18b zeigt die Ermittlung der Positionswerte in Abhängigkeit vom ermittelten Rechtecksignal, insbesondere durch Bildung der Verhältnisse von Flankenabständen, insbesondere durch Bildung der Verhältnisse von aufeinanderfolgenden konstanten Werten $T_{i-1}/T_i$

Die Bestimmung des Drehmomentes erfolgt mittels folgender Formeln: Es werden während der momentenlosen Rotation alle einzelnen momentenlosen $\gamma_{ml}$-Werte zeitgleich mit der dazu ermittelten Drehwinkellage berechnet:

$$\gamma_{ml1} = \alpha_{ml1}/T_{ml1}$$

$$\gamma_{ml2} = \alpha_{ml2}/T_{ml2}$$

$$...$$

$$\gamma_{mli} = \alpha_{mli}/T_{mli}$$

$$\gamma_{mln} = \alpha_{mln}/T_{mln}$$

Die Drehwinkellagen bestimmen sich bei diesem Ausführungsbeispiel wie folgt (vgl. Fig. 18b):

$$\text{Position } X° = T_1/T_2$$

$$\text{Position } Y° = T_2/T_3$$

$$\text{Position } i° = T_{i-1}/T_i$$

$$\text{Position } n° = T_{n-1}/T_n$$

Durch entsprechende Wahl der Breiten der unterschiedlichen Felder des Rings 34 kann erreicht werden, dass sämtliche Werte bei einer Umdrehung unterschiedlich sind, so dass eine eindeutige Zuordnung zwischen den Werten und den entsprechenden Positionen möglich ist. Eine graphische Darstellung der Werte der entsprechenden Drehwinkellagen und insbesondere auch der Drehrichtung zeigt Figur 18e. Die Bestimmung der Drehwinkellage erfolgt durch Bestimmung des zu einem bestimmten Wert $T_{i-1}/T_i$ gehörigen Winkels, die Bestimmung der Drehrichtung wird ermöglicht durch Bestimmung, ob die ermittelten Werte $T_{i-1}/T_i$ steigen oder fallen.

Es werden während der momentbeaufschlagten Rotation alle einzelnen momentbeaufschlagten $\gamma_m$-Werte zeitgleich mit der dazu ermittelten Drehwinkellage berechnet:

$$\gamma_{m1} = \alpha_{m1}/T_{m1}$$

$$\gamma_{m2} = \alpha_{m2}/T_{m2}$$

$$...$$

$$\gamma_{mi} = \alpha_{mi}/T_{mi}$$

$$\gamma_{mn} = \alpha_{mn}/T_{mn}$$

Die Drehmomente können sich schließlich folgendermaßen bestimmen lassen, wobei k eine material- und geometrieabhängige Kalibrierkonstante ist:

$$M_{1(x°)} = | (\gamma_{m1} - \gamma_{m11}) | k$$

$$M_{2(y°)} = | (\gamma_{m2} - \gamma_{m12}) | k$$

$$...$$

$$M_{i(i°)} = | (\gamma_{mi} - \gamma_{m1i}) | k$$

$$M_{n(n°)} = | (\gamma_{mn} - \gamma_{m1n}) | k$$

Ein Ablaufdiagramm, welches den beschriebenen Ablauf zur Bestimmung der Drehwinkel und der drehwinkelabhängigen Drehmomente aus einem einzigen Rechtecksignal nochmals übersichtlich darstellt, zeigt Figur 18d.

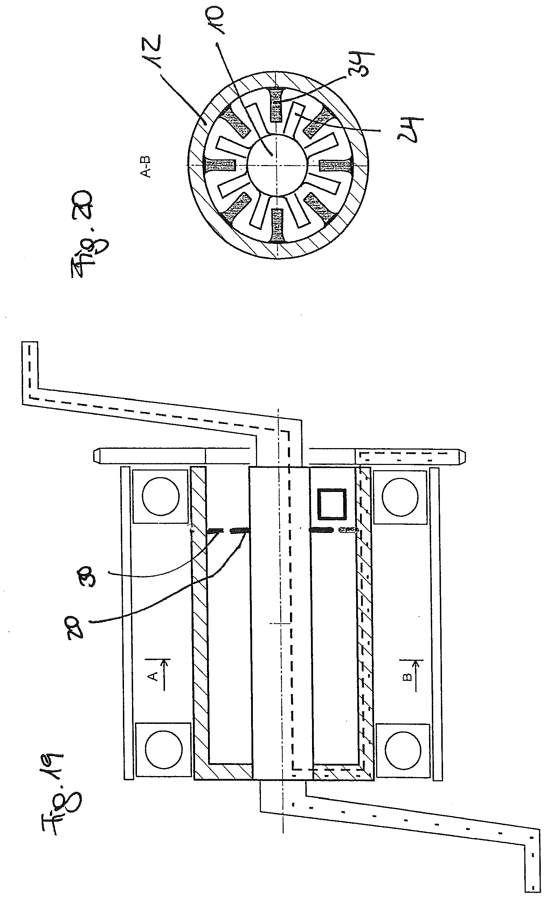

Figur 19 zeigt ein weiteres Ausführungsbeispiel einer erfindungsgemäßen Vorrichtung, deren Grundaufbau den Vorrichtungen gemäß Figur 4 oder 8 entspricht, wobei die Messgeber 20, 30 nicht auf der Außenseite der Torsionshülse wie in Figur 4 oder 8 angeordnet sind, sondern der erste Messgeber 20 an der Tretlagerwelle im Zwischenraum zwischen der Tretlagerwelle und der Torsionshülse und der zweite Messgeber 30 auf der Innenseite der Torsionshülse im Zwischenraum zwischen der Torsionshülse und der Tretlagerwelle angeordnet ist.

Figur 20 zeigt einen Schnitt durch die Vorrichtung gemäß Figur 19 entlang der Linie A-B. Die Ringe 24, 34 werden beispielsweise durch abschattende oder reflektierende oder magnetflussändernde Elemente gebildet, welche radial entweder ausgehend von dem als Tretlagerwelle ausgebildeten Rotationskörper 10 nach außen oder radial von dem als Torsionshülse ausgebildeten Rotationskörper 12 nach innen angeordnet sind, wobei diese umlaufend gegeneinander versetzt angeordnet sind, so dass sich eine Verzahnung bildet. Eine derartige Anordnung der Messgeber 20, 30 ist besonders platzsparend.

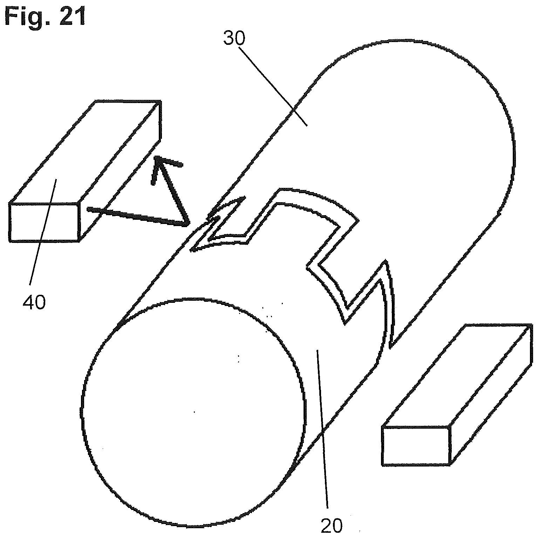

Eine alternative Ausgestaltung der Messgeber 20, 30 zeigt Figur 21, wobei die Messgeber 20, 30 als zylindrische Hülsen ausgebildet sind und die Ringe als axiale Abschnitte einer zylindrischen Wandung ausgebildet sind und eine in axialer Richtung ineinandergreifende Verzahnung aufweisen, was eine besonders platzsparende Anordnung ermöglicht.

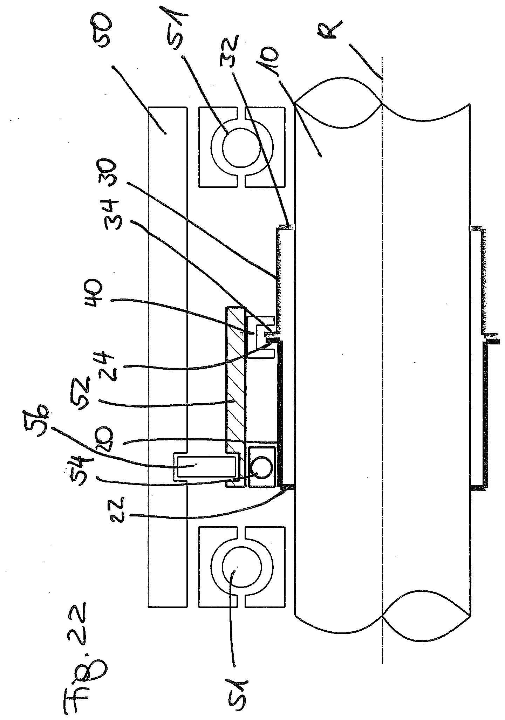

Figur 22 zeigt ein weiteres Ausführungsbeispiel einer erfindungsgemäßen Vorrichtung, deren Grundaufbau der Vorrichtung gemäß Figur 1 entspricht, wobei die Befestigung des Messaufnehmers 40 dargestellt ist. Die Vorrichtung ist in der Regel in einer Einbauhülse 50 angeordnet. Die Einbauhülse 50 ist in der Regel über zwei Lager 51 an dem Rotationskörper 10 angeordnet, wobei die Lager 51 Spiel aufweisen.

Der Messaufnehmer 40 kann in einer nicht dargestellten Ausführungsform an der Einbauhülse 50 direkt befestigt sein. Dies weist jedoch den Nachteil auf, dass Relativbewegungen zwischen dem Messaufnehmer 40 und den Messgebern 20, 30 nicht auszuschließen sind. Daher ist gemäß dem in Figur 22 dargestellten Ausführungsbeispiel der Messaufnehmer 40 an einem Gehäuse 52 angeordnet, welches an dem ersten Messgeber 20 über eine spielfreie Lagerung 54 spielfrei gelagert angeordnet ist. Das Gehäuse 52 ist über eine Verdrehsicherung 56 an der Einbauhülse 50 angeordnet. Insgesamt ergibt sich damit eine Art schwimmender Lagerung des Messaufnehmers 40, welche insbesondere Relativbewegungen zwischen dem Messaufnehmer 40 und den Messgebern 20, 30 verringert oder sogar ausschließt. In einer alternativen Ausführungsform kann der Messaufnehmer 40 über die spielfreie Lagerung 54 statt an dem ersten Messgeber 20 auch an dem Rotationskörper 10 oder an beiden Messgebern 20, 30 angeordnet sein.

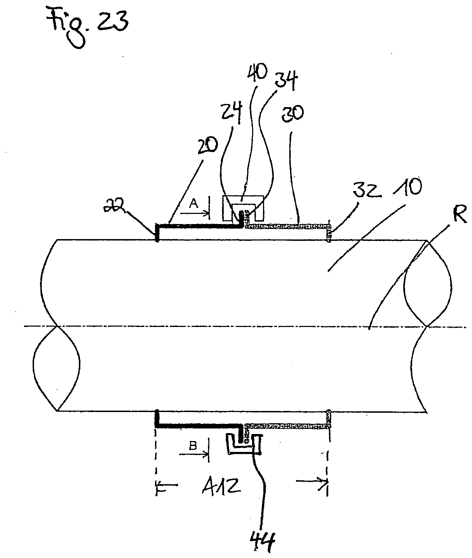

Figur 23 zeigt ein weiteres Ausführungsbeispiel einer erfindungsgemäßen Vorrichtung, deren Grundaufbau der Vorrichtung gemäß Figur 1 entspricht. Die Vorrichtung gemäß Figur 23 weist zusätzlich zu dem Messaufnehmer 40 wenigstens einen weiteren Messaufnehmer 44 auf, welcher beispielsweise um 180° gegenüber der Rotationsachse R versetzt zu dem Messaufnehmer 40 angeordnet ist. Grundsätzlich ist auch der Einsatz von drei oder mehr Messaufnehmern denkbar.

Vorzugsweise ist der Messaufnehmer 44 identisch zu dem Messaufnehmer 40 ausgebildet. Der Messaufnehmer 44 detektiert insbesondere ein Rechtecksignal, welches von beiden Messgebern 20, 30 beeinflusst wird. Dieses Rechtecksignal kann in identischer Weise wie das von dem Messaufnehmer 40 aufgenommene Rechtecksignal ausgewertet werden, wodurch sich einerseits eine Möglichkeit zur redundanten Messung ergibt. Andererseits kann durch Mittelung der Ergebnisse beider Messaufnehmer 40, 44 eine höhere Genauigkeit erzielt werden. In einer Ausführungsform kommt der wenigstens eine weitere Messaufnehmer 44 in einer Vorrichtung mit Messgebern 20, 30 wie in Figur 17 dargestellt zur Anwendung, welche über den Umfang verteilt zumindest an einem Ring 24 Felder unterschiedlicher Breite aufweist, um den Drehwinkel bestimmen zu können. Durch Anordnung wenigstens zweier Messaufnehmer 40, 44 insbesondere diametral gegenüber befindet sich immer einer der Messaufnehmer in einem Bereich mit Feldern kleinerer Breite und einer der Messaufnehmer in einem Bereich mit Feldern größerer Breite, wenn die Breite der Felder über den Umfang verteilt zunimmt. Dadurch befindet sich immer zumindest ein Messaufnehmer in einem Bereich, in welchem er in kurzen Zeitabständen Messergebnisse liefern kann, so dass über die gesamte Drehung in kurzen Zeitabständen Messergebnisse geliefert werden können, abwechselnd von dem einen Messaufnehmer 40 und von dem anderen Messaufnehmer 44.

Bezugszeichenliste

| | |
|---|---|
| 10 | Rotationskörper |
| 12 | Rotationskörper |
| 14 | Kurbel |
| 16 | Kurbel |
| 18 | Abtrieb |
| 20 | erster Messgeber |
| 22 | Befestigungselement |
| 24 | Ring |
| 30 | zweiter Messgeber |
| 32 | Befestigungselement |
| 34 | Ring |
| 40 | Messaufnehmer |
| 41 | zusätzlicher Messgeber |
| 42 | zusätzlicher Messaufnehmer |
| 44 | Messaufnehmer |
| 45 | Trigger |
| 50 | Einbauhülse |
| 51 | Lager |
| 52 | Gehäuse |
| 54 | Lager |
| 56 | Verdrehsicherung |
| | |
| A12 | axialer Abstand |

**Patentansprüche**

1. Verfahren zur Bestimmung des auf einen um eine Drehachse drehbar antreibbaren Rotationskörpers ausgeübten Drehmoments, mit einem ersten und einen zweiten Messgeber, die jeweils mit einem Befestigungselement an dem Rotationskörper in axialem Abstand zueinander angeordnet sind und den Rotationskörper umschließende Ringe aus alternierend unterschiedliches Signalverhalten aufweisenden Feldern umfassen, wobei die relative Anordnung zwischen dem Ring des ersten Messgebers und dem Ring des zweiten Messgebers eine offene Anordnung ist, wobei dem ersten Messgeber und dem zweiten Messgeber gemeinsam ein Messaufnehmer zugeordnet ist, welcher von beiden Messgebern gemeinsam ein Ausgangssignal aufnimmt, aus welchem ein Rechtecksignal gebildet wird, aus welchem in einem ersten Schritt aus Flankenabständen bestimmter steigender und/oder fallender Flanken des Rechtecksignals konstante Werte $T_i$, welche von der Geometrie der Ringe der beiden Messgeber abhängig sind, und variable Werte $\alpha_i$, welche von dem ausgeübten Drehmoment abhängig sind, bestimmt werden, wobei bei einer offenen Anordnung zwischen dem Ring des ersten Messgebers und dem Ring des zweiten Messgebers jedes einzelne der an den ringförmigen Elementen angeordneten abschattenden Elemente sowohl mit einer Vorderkante als auch mit einer rücklaufenden Kante eine steigende oder fallende Flanke im Rechtecksignal erzeugt, wobei bei einer offenen Anordnung der beiden Ringe der beiden Messgeber gegeneinander die konstanten Werte $T_i$, $T_i'$ als der Abstand einer Flanke zur übernächsten gleichsinnigen Flanke oder als der Abstand zweier benachbarter gegensinniger Flanken, insbesondere der Abstand zwischen einer steigenden Flanke und einer darauffolgenden fallenden Flanke, und die variablen Werte $\alpha_i$, $\alpha_i'$ als der Abstand zweier benachbarter gegensinniger Flanken, welche zu den bei der Bestimmung der konstanten Werte verwendeten Flanken gegensinnig ausgebildet sind, insbesondere der Abstand zwischen einer fallenden Flanke und einer darauffolgenden steigenden Flanke, oder als der Abstand zweier benachbarter gleichsinniger Flanken definiert ist und dass bei einer offenen Anordnung der beiden Ringe der beiden Messgeber gegeneinander über eine oder mehrere vollständige Umdrehungen des unbelasteten, drehmomentlosen Rotationskörpers die dem ersten Messgeber zugeordneten konstanten Werte $T_{mli}$, i=1...n, und die variablen Werte $\alpha_{mli}$, i=1...n, jeweils aufsummiert und die dem zweiten Messgeber zugeordneten konstanten Werte $T_{mli}'$, i=1...n, und die variablen Werte $\alpha_{mli}'$, i=1...n, jeweils aufsummiert und die momentlosen Verhältnisse

$$\gamma_{ml} = (\alpha_{ml1} + \alpha_{ml2} + ... + \alpha_{mln}) / (T_{ml1} + T_{ml2} + ... + T_{mln})$$

$$= \sum_{i=1}^{n} a_{mli} / \sum_{i=1}^{n} T_{mli}$$

und

$$\gamma'_{ml} = (\alpha'_{ml1} + \alpha'_{ml2} + ... + \alpha'_{mln}) / (T'_{ml1} + T'_{ml2} + ... + T'_{mln})$$

$$= \sum_{i=1}^{n} a'_{mli} / \sum_{i=1}^{n} T'_{mli}$$

gebildet werden, wobei die $\gamma_{ml}$-Werte und $\gamma'_{ml}$-Werte folgender Bedingung genügen:

$$\gamma_{ml} < \gamma'_{ml}$$

wobei über eine oder mehrere vollständige Umdrehungen des mit dem zu bestimmenden Drehmoment belasteten Rotationskörpers die dem ersten Messgeber zugeordneten konstanten Werte $T_{mi}$, i=1...n, und die variablen Werte $\alpha_{mi}$, i=1...n, jeweils aufsummiert und die dem zweiten Messgeber zugeordneten konstanten Werte $T_{mi}'$, i=1...n, und die variablen Werte $\alpha_{mi}'$, i=1...n, jeweils aufsummiert und die momentbeaufschlagten Verhältnisse

$$\gamma_m = (\alpha_{m1} + \alpha_{m2} + ... + \alpha_{mn}) / (T_{m1} + T_{m2} + ... + T_{mn})$$

$$= \sum_{i=1}^{n} a_{mi} / \sum_{i=1}^{n} T_{mi}$$

und

$$\gamma'_m = (\alpha'_{m1} + \alpha'_{m2} + ... + \alpha'_{mn}) / (T'_{m1} + T'_{m2} + ... + T'_{mn})$$

$$= \sum_{i=1}^{n} a'_{mi} / \sum_{i=1}^{n} T'_{mi}$$

gebildet werden, wobei die $\gamma_m$-Werte und $\gamma'_m$-Werte folgender Bedingung genügen:

$$\gamma_m < \gamma'_m$$

wobei die Arbeit an dem momentbeaufschlagten Rotationskörper bestimmt wird aus den Gleichungen

$$W = \int_0^{2\pi} M d\varphi = \overline{M} 2\pi \approx |(\gamma_m - \gamma_{ml})| k$$

und

$$W` = \int_0^{2\pi} M`d\varphi = \overline{M}`2\pi \approx |(\gamma'_m - \gamma'_{ml})| k,$$

wobei k eine Kalibrierkonstante und $\varphi$ der Drehwinkel des Rotationskörpers ist und wobei das gesamte Drehmoment bestimmt wird durch $\overline{M} + \overline{M}'$, wobei

$$\overline{M} = W/2\pi \approx |(\gamma_m - \gamma_{ml})| k / 2\pi$$

und

$$\overline{M}` = W`/2\pi \approx |(\gamma'_m - \gamma'_{ml})|k/2\pi.$$

**2.** Verfahren nach Anspruch 1, **dadurch gekennzeichnet, dass** die Summenbildung während einer Umdrehung des Rotationskörpers an wenigstens zwei verschiedenen Flanken, vorzugsweise an jeder steigenden Flanke und/oder jeder fallenden Flanke neu begonnen wird.

**3.** Vorrichtung zur Bestimmung des auf einen um eine Drehachse drehbar antreibbaren Rotationskörpers ausgeübten Drehmoments gemäß dem Verfahren nach einem der Ansprüche 1 oder 2, mit einem ersten und einem zweiten Messgeber, die jeweils mit einem Befestigungselement an dem Rotationskörper in axialem Abstand zueinander angeordnet sind und den Rotationskörper umschließende Ringe aus alternierend unterschiedliches Signalverhalten aufweisenden Feldern umfassen,
**dadurch gekennzeichnet, dass**
dem ersten Messgeber und dem zweiten Messgeber gemeinsam ein Messaufnehmer zugeordnet ist, welcher von beiden Messgebern gemeinsam ein Ausgangssignal aufnimmt, aus welchen ein Rechtecksignal ermittelbar ist und dass die Felder eines Rings nicht sämtlich gleich groß ausgebildet sind.

**4.** Vorrichtung nach Anspruch 3,
**dadurch gekennzeichnet, dass** wenigstens einer der Ringe axial relativ zu dem Befestigungselement des zugehörigen Messgebers an dem Rotationskörper derart beabstandet ist, dass die Ringe der beiden Messgeber ohne oder mit einem kleinen axialen Abstand zueinander angeordnet sind.

**5.** Vorrichtung nach Anspruch 3 oder 4,
**dadurch gekennzeichnet, dass** der Messaufnehmer auf einem optischen, induktiven, magnetischen oder kapazitiven Prinzip beruht.

**6.** Vorrichtung nach einem der Ansprüche 3 bis 5, **dadurch gekennzeichnet, dass** der Messaufnehmer an dem Rotationskörper und/oder an einem oder beiden der Messgeber spielfrei gelagert angeordnet ist.

**7.** Vorrichtung nach einem der Ansprüche 3 bis 6,
**dadurch gekennzeichnet, dass** die Anzahl der Felder beider Ringe gleich ist.

**8.** Vorrichtung nach einem der Ansprüche 3 bis 7,
**dadurch gekennzeichnet, dass** die Ringe transparente und absorbierende Felder aufweisen oder dass die Ringe reflektierende und nicht reflektierende Felder aufweisen.

**9.** Vorrichtung nach einem der Ansprüche 3 bis 8,
**dadurch gekennzeichnet, dass** der Rotationskörper als Tretlagerwelle ausgebildet ist.

**10.** Vorrichtung nach Anspruch 9,
**dadurch gekennzeichnet, dass** der Rotationskörper als Tretlagerwelle ausgebildet ist, um welche eine Torsionshülse angeordnet ist, welche mit einem ersten Ende an einem ersten Ende der Tretlagerwelle angeordnet ist, wobei der Abtrieb an einem dem ersten Ende gegenüberliegenden zweiten Ende der Torsionshülse erfolgt, wobei einer der Messgeber an der Torsionshülse und der andere der Messgeber an der Tretlagerwelle angeordnet ist.

**11.** Vorrichtung nach einem der Ansprüche 3 bis 10,
**dadurch gekennzeichnet, dass** der Rotationskörper als Torsionshülse ausgebildet ist, welche um eine Tretlagerwelle angeordnet ist und welche mit einem ersten Ende an einem ersten Ende der Tretlagerwelle angeordnet ist, wobei der Abtrieb an einem dem ersten Ende gegenüberliegenden zweiten Ende der Torsionshülse erfolgt, wobei beide Messgeber an der Torsionshülse angeordnet sind.

**12.** Vorrichtung nach einem der Ansprüche 3 bis 11,
**dadurch gekennzeichnet, dass** die Ebene der Felder der Ringe quer, insbesondere senkrecht, zur Rotationsachse des Rotationskörpers angeordnet ist.

**13.** Vorrichtung nach einem der Ansprüche 3 bis 12,
**dadurch gekennzeichnet, dass** die Ringe als axialer Abschnitt einer zylindrischen Wandung ausgebildet sind und eine in axialer Richtung ineinandergreifende Verzahnung aufweisen, so dass auf einer umlaufenden Linie abwechselnd Felder des ersten Messgebers und des zweiten Messgebers angeordnet sind.

**14.** Vorrichtung nach einem der Ansprüche 3 bis 13,
**dadurch gekennzeichnet, dass** Mittel zur Bestimmung des Drehwinkels vorgesehen sind, welche insbesondere einen zusätzlichen Messgeber und einen zusätzlichen Messaufnehmer umfassen.

**Claims**

**1.** Method for determining the torque exerted on a rotating body that can be rotatably driven about an axis of rotation including a first and a second measuring transducer, which are disposed axially spaced apart from one another on the rotating body by means of a respective fastening element and comprise rings of fields having alternating differing signal behaviour which encircle the rotating body, wherein the relative arrangement between the ring of the first measuring transducer and the ring of the second measuring transducer is an open arrangement, wherein one measuring sensor, which receives an output signal from both measuring transducers together, is associated with both the first measuring transducer and the second measuring transducer, from which output signal a square wave signal is formed, from which constant values $T_i$, which are a function of the geometry of the rings of the two measuring transducers, and variable values $\alpha_i$i, which are a function of the exerted torque, are determined in a first step from the edge separation of specific rising and/or falling edges of the square wave signal, wherein, in the case of an open arrangement between the ring of the first measuring transducer and the ring of the second measuring transducer, each individual shading element disposed on the ring-shaped elements generates a rising or falling edge in the square wave signal with both a leading edge and a trailing edge, wherein, in the case of an open arrangement of the two rings of the two measuring transducers with respect to one another, the constant values $T_i$, $T_i'$ are defined as the distance of a flank to the next but one similarly oriented flank or as the distance between two adjacent oppositely oriented flanks, in particular the distance between a rising edge and a subsequent falling edge, and the variable values $\alpha_i$, $\alpha_i'$ are defined as the distance between two adjacent opposite flanks, which are oriented opposite to the flanks used for the determination of the constant values, in particular the distance between a falling edge and a subsequent rising edge, or as the distance between two adjacent similarly oriented flanks, and that, in the case of an open arrangement of the two rings of the two measuring transducers with respect to one another, the constant values $T_{mli}$, i=l...n, and the variable values $\alpha_{mli}$, i=l...n, associated with the first measuring transducer and the values $T_{mli}'$, i=l...n, and the variable values $\alpha_{mli}'$, i=l...n, associated with the second measuring transducer are respectively summed over one or more complete revolutions of the unloaded, torque-free rotating body, and the torque-free relationships

$$\gamma_{ml} = (\alpha_{ml1} + \alpha_{ml2} + ... + \alpha_{mln}) / (T_{ml1} + T_{ml2} + ... + T_{mln})$$
$$= \sum_{i=1}^{n} a_{mli} / \sum_{i=1}^{n} T_{mli}$$

and

$$\gamma'_{ml} = (\alpha'_{ml1} + \alpha'_{ml2} + ... + \alpha'_{mln}) / (T'_{ml1} + T'_{ml2} + ... + T'_{mln})$$
$$= \sum_{i=1}^{n} a'_{mli} / \sum_{i=1}^{n} T'_{mli}$$

are formed, wherein the $\gamma_{ml}$ and $\gamma'_{ml}$ values satisfy the following condition:

$$\gamma_{ml} < \gamma'_{ml}$$

wherein the constant values $T_{mi}$, i=1...n, and the variable values $\alpha_{mi}$, i=1...n,, associated with the first measuring transducer and the constant values $T_{mi}'$, i=1...n, and the variable values $\alpha_{mi}'$, i=1...n, associated with the second measuring transducer are respectively over one or more complete revolutions of the rotating body loaded with the torque to be determined, and the torque-loaded relationships

$$\gamma_m = (\alpha_{m1} + \alpha_{m2} + \ldots + \alpha_{mn}) / (T_{m1} + T_{m2} + \ldots + T_{mn})$$

$$= \sum_{i=1}^{n} a_{mi} / \sum_{i=1}^{n} T_{mi}$$

and

$$\gamma'_m = (\alpha'_{m1} + \alpha'_{m2} + \ldots + \alpha'_{mn}) / (T'_{m1} + T'_{m2} + \ldots + T'_{mn})$$

$$= \sum_{i=1}^{n} a'_{mi} / \sum_{i=1}^{n} T'_{mi}$$

are formed, wherein the $\gamma_m$ and $\gamma'_m$ values satisfy the following condition:

$$\gamma_m < \gamma'_m$$

wherein the work on the torque-loaded rotating body is determined from the equations

$$W = \int_0^{2\pi} M d\varphi = \overline{M} 2\pi \approx |(\gamma_m - \gamma_{m1})| k$$

and

$$W' = \int_0^{2\pi} M' d\varphi = \overline{M}' 2\pi \approx |(\gamma'_m - \gamma'_{m1})| k,$$

wherein k is a calibration constant and $\phi$ is the angle of rotation of the rotating body, and wherein the total torque is determined by $\overline{M} + \overline{M}'$, wherein

$$\overline{M} = W/2\pi \approx |(\gamma_m - \gamma_{m1})| k / 2\pi$$

and

$$\overline{M}' = W'/2\pi \approx |(\gamma'_m - \gamma'_{m1})| k / 2\pi.$$

2. Method according to Claim 1,
   **characterised in that** the summation during a revolution of the rotating body is started anew on at least two different edges, preferably on each rising edge and/or each falling edge.

3. Apparatus for determining the torque exerted on a rotating body that can be rotatably driven about an axis of rotation according to the method according to any one of Claims 1 or 2, including a first and a second measuring transducer, which are disposed axially spaced apart from one another on the rotating body by means of a respective fastening element and comprise rings of fields having alternating differing signal behaviour which encircle the rotating body,
   **characterised in that**
   one measuring sensor, which receives an output signal from both measuring transducers together, is associated with both the first measuring transducer and the second measuring transducer, from which output signal a square wave signal can be determined, and that the fields of a ring do not all have the same size.

4. Apparatus according to Claim 3,
   **characterised in that**, with respect to the fastening element of the associated measuring transducer, at least one of the rings is axially spaced apart on the rotating body in such a way that the rings of the two measuring transducers are arranged with no or with a small axial distance to one another.

5. Apparatus according to Claim 3 or 4,
   **characterised in that** the measuring sensor is based on an optical, inductive, magnetic or capacitive principle.

6. Apparatus according to any one of Claims 3 to 5, **characterised in that** the measuring sensor is disposed on the rotating body and/or on one or both of the measuring transducers in a play-free manner.

7. Apparatus according to any one of Claims 3 to 6, **characterised in that** the number of fields of the two rings is the same.

8. Apparatus according to any one of Claims 3 to 7, **characterised in that** the rings have transparent and absorbing fields or that the rings have reflective and nonreflective fields.

9. Apparatus according to any one of Claims 3 to 8,
   **characterised in that** the rotating body is configured as a bottom bracket shaft.

10. Apparatus according to Claim 9,
    **characterised in that** the rotating body is configured as a bottom bracket shaft around which a torsion sleeve is disposed, wherein said torsion sleeve is positioned with a first end on a first end of the bottom bracket shaft, wherein the output occurs at a second end of the torsion sleeve opposite to the first end, and wherein one of the measuring transducers is disposed on the torsion sleeve and the other measuring transducer is disposed on the bottom bracket shaft.

11. Apparatus according to any one of Claims 3 to 10, **characterised in that** the rotating body is configured as a torsion sleeve which is disposed around a bottom bracket shaft and is positioned with a first end on a first end of the bottom bracket shaft, wherein the output occurs at a second end of the torsion sleeve opposite to the first end, wherein both measuring transducers are disposed on the torsion sleeve.

12. Apparatus according to any one of Claims 3 to 11, **characterised in that** the plane of the fields of the rings is arranged transverse, in particular perpendicular, to the axis of rotation of the rotating body.

13. Apparatus according to any one of Claims 3 to 12, **characterised in that** the rings are configured as an axial section of a cylindrical wall and have a toothing that meshes in axial direction, so that, on a circumferential line, fields of the first measuring transducer and of the second measuring transducer are alternately arranged.

14. Apparatus according to any one of Claims 3 to 13, **characterised in that** means for determining the angle of rotation are provided, which in particular comprise an additional measuring transducer and an additional measuring sensor.

**Revendications**

1. Procédé permettant de déterminer le couple exercé sur un corps rotatif entrainé en rotation autour d'un axe de rotation comprenant un premier émetteur de mesure et un second émetteur de mesure qui sont respectivement montés à distance axiale l'un de l'autre avec un élément de fixation sur le corps rotatif, et comportant des anneaux entourant le corps rotatif de champs ayant en alternance un comportement de signal différent, l'agencement relatif entre l'anneau du premier émetteur de mesure et l'anneau du second émetteur de mesure étant un agencement ouvert, au premier émetteur de mesure et au second émetteur de mesure étant conjointement associé un récepteur de mesure qui reçoit conjointement un signal de sortie des deux émetteurs de mesure, permettant de former un signal rectangulaire à partir duquel sont déterminés, dans une première étape, à partir des distances de flancs montant et/ou de flancs descendants déterminés du signal rectangulaire, des valeurs constantes $T_i$ qui dépendent de la géométrie de l'anneau des deux émetteurs de mesure, et des valeurs variables $\alpha_i$ qui dépendent du couple exercé, dans le cas d'un agencement ouvert entre l'anneau du premier émetteur de mesure et l'anneau du second émetteur de mesure chacun des éléments individuels d'évaluation montés sur les éléments annulaire produisant, avec une arête avant et également avec une arête dirigée vers l'arrière un flanc montant ou un flanc dans le signal rectangulaire, dans le cas d'un agencement ouvert des deux anneaux des deux émetteurs de mesure l'un par rapport à l'autre, les valeurs constantes $T_i$, $T_i'$ étant définies comme la distance d'un flanc au deuxième flanc suivant du même sens ou comme la distance entre deux flancs du même sens voisins, en particulier la distance entre un flanc montant et un flanc descendant suivant, et, les valeurs variables $\alpha_i$, $\alpha_i'$ étant définies comme la distance entre deux flancs de sens opposé voisins qui sont formés au sens inverse des flancs utilisés lors de la détermination des valeurs constantes, en particulier la distance entre un flanc descendant et un flanc montant suivant ou comme la distance entre deux flancs de même sens voisins, et dans le cas d'un agencement ouvert des deux anneaux des deux émetteurs de mesure, l'un par rapport à l'autre, sur au moins une rotation complète du corps rotatif non sollicité exempt de couple les valeurs constantes $T_{m1i}$, i=1...n, et les valeurs variables $\alpha_{m1i}$, i=1...n étant respectivement additionnées associées au premier émetteur de mesure et les valeurs constantes $T_{m1i}'$, i=1...n, et les valeurs variables $\alpha_{m1i}'$, i=1 à n, associées au second émetteur de mesure étant respectivement additionnées, et les relations sans sollicitation par un couple :

$$\gamma_{m1} = (\alpha_{m11} + \alpha_{m12} + ... + \alpha_{m1n}) / (T_{m11} + T_{m12} + ... + T_{m1n})$$
$$= \sum_{i=1}^{n} a_{m1i} / \sum_{i=1}^{n} T_{m1i}$$

et

$$\gamma'_{m1} = (\alpha'_{m11} + \alpha'_{m12} + ... + \alpha'_{m1n}) / (T'_{m11} + T'_{m12} + ... + T'_{m1n})$$
$$= \sum_{i=1}^{n} a'_{m1i} / \sum_{i=1}^{n} T'_{m1i}$$

étant formées, les valeurs $\gamma_{m1}$ et $\gamma'_{m1}$ satisfaisant à la condition suivante :

$$\gamma_{m1} < \gamma'_{m1}$$

sur au moins une rotation complète du corps rotatif sollicité par le couple à déterminer les valeurs constantes $T_{mi}$, i=1...n, et les valeurs variables $\alpha_{mli}$, i=1...n, associées au premier émetteur de mesure étant respectivement additionnées, et les valeurs constantes $T_{mi}'$, i=1...n et les valeurs variables $\alpha_{mi}'$, i=1...n associées au second émetteur de mesure étant respectivement additionnées et les relations avec sollicitation par le couple :

$$\gamma_m = (\alpha_{m1} + \alpha_{m2} + ... + \alpha_{mn}) / (T_{m1} + T_{m2} + ... + T_{mn})$$
$$= \sum_{i=1}^{n} a_{mi} / \sum_{i=1}^{n} T_{mi}$$

et

$$\gamma'_m = (\alpha'_{m1} + \alpha'_{m2} + ... + \alpha'_{mn}) / (T'_{m1} + T'_{m2} + ... + T'_{mn})$$
$$= \sum_{i=1}^{n} a'_{mi} / \sum_{i=1}^{n} T'_{mi}$$

étant formées, les valeurs $\gamma_m$ et $\gamma'_m$ satisfaisant à la condition suivante :

$$\gamma_m < \gamma'_m$$

le travail sur le corps rotatif sollicité par le couple étant déterminé à partir des équations :

$$W = \int_0^{2\pi} M d\varphi = \overline{M} 2\pi \approx |(\gamma_m - \gamma_{m1})| k$$

et

$$W` = \int_0^{2\pi} M`d\varphi = \overline{M}`2\pi \approx |(\gamma'_m - \gamma'_{m1})| k,$$

dans lesquels k représente une constante de calibrage et φ représente l'angle de rotation du corps rotatif, et le couple global étant déterminé par $\overline{M}$ et $\overline{M}$' avec :

$$\overline{M} \;=\; W/2\pi \;\approx\; |\,(\gamma_m \;-\; \gamma_{ml})\,|\,k/2\pi$$

et

$$\overline{M}` \;=\; W`/2\pi \;\approx\; |\,(\gamma'_m \;-\; \gamma'_{ml})\,|\,k/2\pi.$$

2. Procédé conforme à la revendication 1,
   **caractérisé en ce que**
   la formation de la somme est à nouveau engagée pendant une rotation du corps rotatif sur au moins deux flancs différents, de préférence sur chaque flanc montant et/ou chaque flanc descendant.

3. Dispositif permettant de déterminer le couple exercé sur un corps rotatif pouvant être entraîné en rotation autour d'un axe de rotation conformément à la mise en oeuvre du procédé conforme à l'une des revendications 1 et 2, comprenant un premier émetteur de mesure et un second émetteur de mesure qui sont respectivement montés à distance l'un de l'autre avec un élément de fixation sur le corps rotatif, et comportent des anneaux entourant le corps rotatif de champs ayant en alternance un comportement de signal différent,
   **caractérisé en ce qu'**
   au premier émetteur de mesure et au second émetteur de mesure est conjointement associé un récepteur de mesure qui reçoit conjointement des deux émetteurs de mesure, un signal de sortie à partir duquel un signal rectangulaire peut être obtenu, et les champs d'un anneau n'ont pas tous la même grandeur.

4. Dispositif conforme à la revendication 3,
   **caractérisé en ce qu'**
   au moins l'un des anneaux est situé à une distance axiale de l'élément de fixation de l'émetteur de mesure associé, sur le corps rotatif, telle que les anneaux des deux émetteurs de mesure soient situés l'un par rapport à l'autre sans distance axiale ou avec une petite distance axiale.

5. Dispositif conforme à la revendication 3 ou 4,
   **caractérisé en ce que**
   le récepteur de mesure est basé sur un principe optique, inductif, magnétique ou capacitif.

6. Dispositif conforme à l'une des revendications 3 à 5,
   **caractérisé en ce que**
   le récepteur de mesure est monté sans jeu sur le corps rotatif et/ou sur l'un ou les deux émetteur(s) de mesure.

7. Dispositif conforme à l'une des revendications 3 à 6,
   **caractérisé en ce que**
   le nombre de champs des deux anneaux est similaire.

8. Dispositif conforme à l'une des revendications 3 à 7,
   **caractérisé en ce que**
   les anneaux ont des champs transparents et absorbants ou les anneaux ont des champs réfléchissants et non réfléchissants.

9. Dispositif conforme à l'une des revendications 3 à 8,
   **caractérisé en ce que**
   le corps rotatif est réalisé sous la forme d'un pédalier.

10. Dispositif conforme à la revendication 9,
    **caractérisé en ce que**
    le corps rotatif est réalisé sous la forme d'un pédalier autour duquel est montée une douille de torsion dont une première extrémité est montée sur une première extrémité du pédalier, la prise de force s'effectuant sur la seconde extrémité de la douille de torsion opposée à la première extrémité de celle-ci, et l'un des émetteurs de mesure étant monté sur la douille de torsion et l'autre émetteur de mesure étant monté sur le pédalier.

11. Dispositif conforme à l'une des revendications 3 à 10,
**caractérisé en ce que**
le corps rotatif est réalisé sous la forme d'une douille de torsion qui est montée autour d'un pédalier et dont une première extrémité est montée sur une première extrémité du pédalier, la prise de force s'effectuant sur la seconde extrémité de la douille de torsion opposée à la première extrémité, et les deux émetteurs de mesure étant montés sur la douille de torsion.

12. Dispositif conforme à l'une des revendications 3 à 11,
**caractérisé en ce que**
le plan des champs des anneaux est transversal en particulier perpendiculaire à l'axe de rotation du corps rotatif.

13. Dispositif conforme à l'une des revendications 3 à 12,
**caractérisé en ce que**
les anneaux sont réalisés sous la forme de segments axiaux d'une paroi cylindrique, et comportent des dentures engrenant en direction axiale de sorte que des champs du premier émetteur de mesure et du second émetteur de mesure soient situés en alternance sur une ligne circulaire.

14. Dispositif conforme à l'une des revendications 3 à 13,
**caractérisé en ce qu'**
il est prévu des moyens de détermination de l'angle de rotation qui comportent en particulier un émetteur de mesure supplémentaire et un récepteur de mesure supplémentaire.

Fig.1

40 34
24 30
20
22 A
32 10
B
A12
R

Fig.2

A-B 24 34 32
10

Fig.3

A-B 24 34 32

EP 2 901 120 B1

Fig.5

Fig.4

## Fig. 6a

$T_{ml1}$    $T'_{ml1}$    $T_{ml\,i}$    $T'_{ml\,i}$    $T_{ml\,n}$

*Signal 1 ohne Last*

$\alpha_{ml1}$    $\alpha'_{ml1}$    $\alpha_{ml\,i}$    $\alpha'_{ml\,i}$    $\alpha_{ml\,n}$

## Fig. 6b

$T_{m1}$    $T'_{m1}$    $T_{m\,i}$    $T'_{m\,i}$    $T_{m\,n}$

*Signal 2 MIT Last*

$\alpha_{m1}$    $\alpha'_{m1}$    $\alpha_{m\,i}$    $\alpha'_{m\,i}$    $\alpha_{m\,n}$

(>)    (<)    (>)    (<)    (>)

## Fig. 6c. *(nur fallende Flanken)*

$$T_{ml1} \qquad T_{ml\,n}$$

Signal 1
ohne Last

$$\alpha_{ml1} \qquad \alpha^{l}_{ml1} \qquad \alpha_{ml\,n} \qquad \alpha^{l}_{ml\,n}$$

## Fig. 6d. *(nur steigende Flanken)*

$$T_{ml1} \qquad T_{ml\,n}$$

Signal 1
ohne Last

$$\alpha_{ml1} \qquad \alpha^{l}_{ml1} \qquad \alpha_{ml\,n} \qquad \alpha^{l}_{ml\,n}$$

Ablaufdiagramm Summenformel offen

Fig. 6e

OHNE Last
OFFSETWERTE

(Signal 1)

Start des **Offsets** mit der ersten erfassten
fallenden oder steigenden Flanke

**Zuordnung der Flanken (gegensinnige)**

= Bestimmung der konstanten und variablen Werte

**T = konstante Werte**
= zuerst Erfassung der steigenden Flanke,
danach der fallenden Flanke

**α = variable Werte**
= zuerst Erfassung der fallenden Flanke,
danach der steigenden Flanke

**Zuordnung der Flanken (gleichsinnige)**

= Bestimmung der konstanten und variablen Werte

**T = konstante Werte**
= Erfassung jeder zweiten gleichsinnigen Flanke

**α = variable Werte**
= Erfassung jeder benachbarten gleichsinnigen Flanke

Bestimmung beider **momentenlosen γ-Werte**

**gegensinniger Flanken**

durch Bildung der Summe aller variablen und
konstanten Werte innerhalb ganzzahliger Umdrehungen

1. momentenlose Werte = $\gamma$ ml n = $\Sigma\alpha$ ml n / $\Sigma$T ml n

2. momentenlose Werte = $\gamma$' ml n = $\Sigma\alpha$' ml n / **$\Sigma$T' ml n**

Bestimmung beider **momentenlosen γ-Werte**

**gleichsinniger Flanken**

durch Bildung der Summe aller variablen und
konstanten Werte innerhalb ganzzahliger Umdrehungen

1. momentenlose Werte = $\gamma$ ml n = $\Sigma\alpha$ ml n / $\Sigma$T ml n

2. momentenlose Werte = $\gamma$' ml n = $\Sigma\alpha$' ml n / **$\Sigma$T ml n**

Zuordnung beider **momentenlosen** γ-Werte
(Offset-Werte) mittels der Bedingung

$\gamma$ ml n = $\Sigma\alpha$ ml n / $\Sigma$T ml n $<$ $\gamma$' ml n = $\Sigma\alpha$' ml n / **$\Sigma$T' ml n**

Zuordnung beider **momentenlosen** γ-Werte
(Offset-Werte) mittels der Bedingung

$\gamma$ ml n = $\Sigma\alpha$ ml n / $\Sigma$T ml n $<$ $\gamma$' ml n = $\Sigma\alpha$' ml n / **$\Sigma$T ml n**

Ablage der Offsetwerte

$\gamma$ ml n $<$ $\gamma$' ml n

In den Speicher einer Recheneinheit

Fig. 6f

```
┌─────────────────┐
│    MIT Last     │
│   MESSWERTE     │
│                 │
│   (Signal 2)    │
└─────────────────┘
```

**Start der Messung** mit der ersten erfassten fallenden oder steigenden Flanke

**Zuordnung der Flanken (gegensinnige)**

= Bestimmung der konstanten und variablen Werte

**T = konstante Werte**
= zuerst Erfassung der steigenden Flanke, danach der fallenden Flanke

**α = variable Werte**
= zuerst Erfassung der fallenden Flanke, danach der steigenden Flanke

**Zuordnung der Flanken (gleichsinnige)**

= Bestimmung der konstanten und variablen Werte

**T = konstante Werte**
= Erfassung jeder zweiten gleichsinnigen Flanke

**α = variable Werte**
= Erfassung jeder benachbarten gleichsinnigen Flanke

Bestimmung beider **momentenbeaufschlagten γ-Werte**

**gegensinniger Flanken**

durch Bildung der Summe aller variablen und konstanten Werte innerhalb ganzzahliger Umdrehungen

1. momentenbeaufschlagte Werte = $\gamma\,m\,n = \Sigma\alpha\,m\,n\,/\,\Sigma T\,m\,n$

2. momentenbeaufschlagte Werte = $\gamma\,'\,m\,n = \Sigma\alpha\,'\,m\,n\,/\,\Sigma T\,'\,m\,n$

Bestimmung beider **momentenbeaufschlagten γ-Werte**

**gleichsinniger Flanken**

durch Bildung der Summe aller variablen und konstanten Werte innerhalb ganzzahliger Umdrehungen

1. momentenbeaufschlagte Werte = $\gamma\,m\,n = \Sigma\alpha\,m\,n\,/\,\Sigma T\,m\,n$

2. momentenbeaufschlagte Werte = $\gamma\,'\,m\,n = \Sigma\alpha\,'\,m\,n\,/\,\Sigma T\,m\,n$

Zuordnung beider **momentenbeaufschlagten** γ-Werte (Offset-Werte) mittels der Bedingung

$\gamma\,m\,n = \Sigma\alpha\,m\,n\,/\,\Sigma T\,m\,n < \gamma\,'\,m\,n = \Sigma\alpha\,'\,m\,n\,/\,\Sigma T\,'\,m\,n$

Zuordnung beider **momentenbeaufschlagten** γ-Werte (Offset-Werte) mittels der Bedingung

$\gamma\,m\,n = \Sigma\alpha\,m\,n\,/\,\Sigma T\,m\,n < \gamma\,'\,m\,n = \Sigma\alpha\,'\,m\,n\,/\,\Sigma T\,m\,n$

Bestimmung der Arbeit innerhalb **ganzzahliger Umdrehungen** mittels folgender Formeln

1. $W = \int M\,d\varphi = \overline{M}\,2\pi \approx I\,(\gamma_m - \gamma_{ml})\,I * k$

2. $W = \int M\,d\varphi = \overline{M}\,2\pi \approx I\,(\gamma\dot{}_m - \gamma\dot{}_{ml})\,I * k$

Bestimmung des **durchschnittlichen Drehmomentes** innerhalb **ganzzahliger Umdrehungen** mittels folgender Formeln

1. $\overline{M} = W/2\pi \approx I\,(\gamma_m - \gamma_{ml})\,I * k$

2. $\overline{M} = W/2\pi \approx I\,(\gamma\dot{}_m - \gamma\dot{}_{ml})\,I * k$

Fig. 7

Fig.8

Fig. 9

Fig. 10

Fig. 11

Fig. 12

Fig. 13a

Fig. 13b

EP 2 901 120 B1

Ablaufdiagramm Markierung Messgeber offen

**Fig. 13C**

**OHNE Last**
**OFFSETWERTE**

Start des Offsets
nach erfassen der Markierung

(Signal 1)

**Zuordnung der Flanken** = Bestimmung der konstanten und variablen Werte

T = konstante Werte = in Bezug zur Markierung

α = variable Werte = in Bezug zur Markierung

(Signal 1)

Bestimmung des **Drehwinkels**

n°

durch Bezug beliebiger Flanken
zur Markierung

(Signal 1)

Bestimmung der zum Drehwinkel
zugeordneten **momentenlosen** Werte
durch Bildung von Wertepaaren
der variablen und konstanten Werte

momentenlose Verhältnisse = $\gamma\, ml\, n = \alpha\, ml\, n\, /\; T\, ml\, n$

(Signal 1)

Ablage der Offsetwerte

Drehwinkel = n° = in Bezug zur Markierung

momentenlosen Werte = $\gamma\, ml\, n = \alpha\, ml\, n\, /\; T\, ml\, n$ = in Bezug zur Markierung

in den Speicher einer Recheneinheit

**MIT Last**
**MESSWERTE**

Start der **Messung**
nach erfassen der Markierung

(Signal 2)

**Zuordnung der Flanken** = Bestimmung der konstanten und variablen Werte

T = konstante Werte = in Bezug zur Markierung

α = variable Werte = in Bezug zur Markierung

(Signal 2)

Bestimmung des **Drehwinkels**

n°

durch Bezug beliebiger Flanken
zur Markierung

(Signal 2)

Bestimmung der zum Drehwinkel
zugeordneten **momentenbeaufschlagten** Werte
durch Bildung von Wertepaaren
der variablen und konstanten Werte

momentenbeaufschlagte Werte = $\gamma\, m\, n = \alpha\, m\, n\, /\; T\, m\, n$

(Signal 2)

Bestimmung der zum **Drehwinkel** zugeordneten **Drehmomente**
durch Bildung von Wertepaaren der Offsetwerte und Messwerte
mit k als Kalibrierkonstante

$M1\ (x°) = |(\gamma\, m1 - \gamma\, ml1)| * k$

$M2\ (Y°) = |(\gamma\, m2 - \gamma\, ml2)| * k$

.

.

.

$Mn\ (n°) = |(\gamma\, m\, n - \gamma\, m'\, n)| * k$

(Signal **1**, Signal **2**)

34

EP 2 901 120 B1

Fig.14

12

10

45

Fig.15

T1    T2    T3    Tn

α1    α2    α3    αn

Fig.16

Fig.17

Fig.18a

Signal 1
OHNE Last

$T1$ $T2$ $T3$ $T_{i-1}$ $T_i$ $T_{n-1}$

$\alpha 1$ $\alpha 2$ $\alpha 3$ $\alpha_{i-1}$ $\alpha_i$

Fig.18b

Signal 2
Drehwinkel

$T1$ $T2$ $T3$ $T_{i-1}$ $T_i$ $T_{n-1}$

$X°=T1/T2$ $Y°=T2/T3$ $i°=T_{i-1}/T_i$

Fig.18c

Signal 3
MIT Last

$T1$ $T2$ $T3$ $T_{i-1}$ $T_i$ $T_{n-1}$

$\alpha 1$ $\alpha 2$ $\alpha 3$ $\alpha_{i-1}$ $\alpha_i$

$\alpha 1+\Delta$ $\alpha 2-\Delta$ $\alpha 3+\Delta$ $\alpha_{i-1}-\Delta$

$\hat{=}\alpha_{m1}$ $\hat{=}\alpha_{m2}$ $\hat{=}\alpha_{mi-1}$

EP 2 901 120 B1

Ablaufdiagramm Variation Messgeber offen

Fig. 18d

**Messung OHNE Last**
**OFFSETWERTE**

↓

Start des **Offsets** mit der ersten erfassten
fallenden oder steigenden Flanke

(Signal 1)

↓

**Zuordnung der Flanken** = Bestimmung der konstanten und variablen Werte

T = konstante Werte = zuerst Erfassung der steigenden Flanke danach der fallenden Flanke
und / oder Erfassung jeder zweiten gleich sinnigen Flanke

$\alpha$ = variable Werte = zuerst Erfassung der fallenden Flanke danach der steigenden Flanke

(Signal 1)

↓

Bestimmung des **Drehwinkels**
durch Bildung von Wertepaaren
der konstanten Werte

$n° = T_{n-1} / T_n$

(Signal 2)

Bestimmung der zum Drehwinkel
zugeordneten **momentenlosen** Werte
durch Bildung von Wertepaaren
der variablen und konstanten Werte

momentenlose Verhältnisse = $\gamma \, ml \, n = \alpha \, ml \, n / T \, ml \, n$

(Signal 1, Signal 2)

↓

Ablage der Offsetwerte

Drehwinkel = $n° = T_{n-1} / T_n$

momentenlosen Werte = $\gamma \, ml \, n = \alpha \, ml \, n / T \, ml \, n$

in den Speicher einer Recheneinheit

---

**Messung MIT Last**
**DREHMOMENT + DREHWINKEL**

↓

Start der **Messung** mit der ersten erfassten
fallenden oder steigenden Flanke

(Signal 3)

↓

**Zuordnung der Flanken** = Bestimmung der konstanten und variablen Werte

T = konstante Werte = zuerst Erfassung der steigenden Flanke danach der fallenden Flanke
und / oder Erfassung jeder zweiten gleich sinnigen Flanke

$\alpha$ = variable Werte = zuerst Erfassung der fallenden Flanke danach der steigenden Flanke

(Signal 3)

↓

Bestimmung des **Drehwinkels**
durch Bildung von Wertepaaren
der konstanten Werte

$n° = T_{n-1} / T_n$

(Signal 2, Signal 3)

Bestimmung der zum Drehwinkel
zugeordneten **momentenbeaufschlagten** Werte
durch Bildung von Wertepaaren
der variablen und konstanten Werte

momentenbeaufschlagte Werte = $\gamma \, m \, n = \alpha \, ml \, n / T \, m \, n$

(Signal 2, Signal 3)

↓

Bestimmung der zum **Drehwinkel** zugeordneten **Drehmomente**
durch Bildung von Wertepaaren der Offsetwerte und Messwerte
mit k als Kalibrierkonstante

$M1 (x°) = |(\gamma \, m1 - \gamma \, ml1)| * k$

$M2 (Y°) = |(\gamma \, m2 - \gamma \, ml2)| * k$

.

$Mn (n°) = |(\gamma \, m \, n - \gamma \, ml \, n)| * k$

(Signal 2, Signal 3)

# Fig. 18e

Fig. 20

Fig. 19

## Fig. 21

Fig. 22

Fig. 23

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0954746 B1
- WO 9606330 A1
- DE 19633380 A1
- DE 4038413 A1
- DE 20305732 U1